# EUROPEAN PATENT SPECIFICATION

(11) **EP 4 193 528 B1**
(45) Date of publication and mention of the grant of the patent: **04.03.2026**
(21) Application number: 21762290.1
(22) Date of filing: 05.08.2021
(51) Int. Cl.: H04L 1/1829

(54) **SPS REACTIVATION DCI**
DCI MIT SPS-REAKTIVIERUNG
DCI DE RÉACTIVATION SPS

(30) Priority: 07.08.2020 GR 20200100465; 07.08.2020 GR 20200100466
(43) Date of publication of application: 14.06.2023
(73) Proprietor: QUALCOMM INCORPORATED, San Diego, California 92121-1714 (US)
(72) Inventor: DIMOU, Konstantinos, San Diego, California 92121 (US); ZHOU, Yan, San Diego, California 92121 (US); LUO, Tao, San Diego, California 92121 (US)
(74) Representative: Tomkins & Co
(86) International application number: PCT/US2021/044845
(87) International publication number: WO 2022/032032

(56) References cited:
- NOKIA ET AL: "Email discussions summary for enhanced IIoT/URLLC for Release 17", vol. TSG RAN, no. Sitges, Spain; 20191209 - 20191212, 2 December 2019 (2019-12-02), XP051834269, Retrieved from the Internet <URL:https://ftp.3gpp.org/tsg_ran/TSG_RAN/TSGR_86/Docs/RP-192657.zip RP-192657.docx> [retrieved on 20191202]
- CATT: "Discussion on enhancement of UL SPS in V2X", vol. RAN WG1, no. Gothenburg, Sweden; 20160822 - 20160826, 13 August 2016 (2016-08-13), XP051142401, Retrieved from the Internet <URL:http://www.3gpp.org/ftp/tsg_ran/WG1_RL1/TSGR1_86/Docs/> [retrieved on 20160813]
- NTT DOCOMO ET AL: "Discussions on DL SPS enhancement", vol. RAN WG1, no. Reno, USA; 20191118 - 20191122, 9 November 2019 (2019-11-09), pages 1 - 9, XP051823670, Retrieved from the Internet <URL:https://ftp.3gpp.org/tsg_ran/WG1_RL1/TSGR1_99/Docs/R1-1912891.zip R1-1912891.docx> [retrieved on 20191109]

## Description

(deleted)

### BACKGROUND

### Technical Field

The present disclosure relates generally to communication systems, and more particularly, to a wireless communication system with semi-persistent scheduling (SPS).

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

3GPP, RP-192657, "Email discussions summary for enhanced IIoT/URLLC for Release 17", Nokia et al discusses the objectives proposed by the companies for Rel-17 IIoT/eURLLC area during Phase 1 of the related email discussion as well as the feedback for the proposed objectives received during the phase 2 email discussion.

3GPP, R1-166437 "Discussion on enhancement of UL SPS in V2X", CATT discusses enhancements on UL SPS in V2X.

3GPP, R1-1912891 "Discussions on DL SPS enhancement", NTT Docomo, Inc. discusses physical layer enhancements for DL SPS.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later. The invention is defined in the independent claims, to which reference should now be made. Advantageous embodiments are set out in the dependent claims.

Methods, computer programs products, and apparatuses for SPS reactivation are provided. In one aspect of the disclosure, an apparatus is provided according to independent claim 1.

In other aspects of the disclosure, an apparatus is provided according to independent claim 8, and methods are provided according to independent claims 14 and 15 respectively.

SPS scheduling is an invaluable tool for optimizing network usage, especially for systems that rely on periodic transmissions of data, such as in an internet voice call, or in the industrial IOT in which sensors and robots exchange periodic data for providing instructions or regular status updates in an automated factory environment, for example.

When initiating an SPS event, the network can use an RRC connection with the UE(s) to establish the channel configurations and allocate resources. In conventional SPS implementations, it is possible for the network to use downlink control information (DCI) in the context of an SPS activation/reactivation to change the resources allocated to the channel for the downlink flow of data. This change may be performed as a result of increased interference on the existing downlink channel, or for scheduling or other reasons.

Current wireless systems, however, provide no mechanism for dynamically updating the physical uplink control channel configurations for any duration other than the single SPS period during which the SPS reactivation signal from the base station was sent. As such, where noise or inter-cell interference phenomena becomes increasingly prevalent on the uplink, the network can incur high latency and overhead for various reasons, including failed acknowledgments, unnecessary retransmissions, and in more severe conditions, potentially significant data loss.

Accordingly, in an aspect of the disclosure, a method, an apparatus, and a computer-readable medium are provided. One method includes that of a UE. The UE receives, from a base station during a semi-persistent scheduling (SPS) reactivation period, a physical uplink control channel (PUCCH) configuration. The PUCCH configuration remains valid for all successive SPS periods unless conditioned by data accompanying the PUCCH configuration or later changed. The UE further transmits a response, using the configured PUCCH for each of the successive SPS periods, to a data message from the base station.

The method further includes that of a base station. The base station identifies, during a semi-persistent scheduling (SPS) reactivation period, a configuration for a physical uplink control channel (PUCCH) valid for all successive SPS periods unless the configuration comprises a condition or the configuration is later changed. The base station transmits to the UE on a downlink control channel (PDCCH) during the SPS reactivation period, the PUCCH configuration.

The apparatus includes a UE. The UE includes at least one processor, and memory coupled to the at least one processor. The memory stores code executable by the at least one processor to cause the UE to: receive, from a base station during a semi-persistent scheduling (SPS) reactivation period, a physical uplink control channel (PUCCH) configuration that remains valid for all successive SPS periods unless conditioned by data accompanying the PUCCH configuration or later changed, and transmit, using the configured PUCCH for each of the successive SPS periods, a response to a data message from the base station.

The apparatus includes another aspect of a UE. The UE includes means for receiving, from a base station during a semi-persistent scheduling (SPS) reactivation period, a physical uplink control channel (PUCCH) configuration that remains valid for all successive SPS periods unless conditioned by data accompanying the PUCCH configuration or later changed. The UE further includes means for transmitting, using the configured PUCCH for each of the successive SPS periods, a response to a data message from the base station.

The apparatus further includes a base station. The base station includes at least one processor, and memory coupled to the at least one processor. The memory stores code executable by the at least one processor to cause the base station to: identify, during a semi-persistent scheduling (SPS) reactivation period, a configuration for a physical uplink control channel (PUCCH) valid for all successive SPS periods unless the configuration comprises a condition or the configuration is later changed, and transmit, to the UE on a downlink control channel (PDCCH) during the SPS reactivation period, the PUCCH configuration.

The computer-readable medium includes code that, when executed by at least one processor of a UE, causes the at least one processor to receive, from a base station during a semi-persistent scheduling (SPS) reactivation period, a physical uplink control channel (PUCCH) configuration that remains valid for all successive SPS periods unless conditioned by data accompanying the PUCCH configuration or later changed. The code causes the at least one processor to transmit, using the configured PUCCH for each of the successive SPS periods, a response to a data message from the base station.

The computer-readable medium further includes code that, when executed by at least one processor of a base station, causes the at least one processor to identify, during a semi-persistent scheduling (SPS) reactivation period, a configuration for a physical uplink control channel (PUCCH) valid for all successive SPS periods unless the configuration comprises a condition or the configuration is later changed. The code further causes the at least one processor to transmit, to the UE on a downlink control channel (PDCCH) during the SPS reactivation period, the PUCCH configuration.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network.
FIG. 2A is a diagram illustrating an example of a first frame, in accordance with various aspects of the present disclosure.
FIG. 2B is a diagram illustrating an example of DL channels within a subframe, in accordance with various aspects of the present disclosure.
FIG. 2C is a diagram illustrating an example of a second frame, in accordance with various aspects of the present disclosure.
FIG. 2D is a diagram illustrating an example of UL channels within a subframe, in accordance with various aspects of the present disclosure.
FIG. 3 is a diagram illustrating an example of a base station and user equipment (UE) in an access network.
FIG. 4 illustrates an example communication between a base station and a UE.
FIG. 5 illustrates an example communication between a base station and a UE.
FIG. 6 illustrates an example communication between a base station and a UE.
FIG. 7 illustrates an example communication between a base station and a UE.
FIG. 8 illustrates an example communication between a base station and a UE.
FIG. 9 is a timing diagram of an example SPS reactivation between a base station and a UE.
FIG. 10 is a timing diagram of an example SPS reactivation between a base station and UE.
FIG. 11 is a timing diagram of consecutive SPS periods.
FIG. 12 is a flowchart of a method of wireless communication at a UE.
FIG. 13 is a flowchart of a method of wireless communication at a base station.
FIG. 14 is a flowchart of a method of wireless communication at a UE.
FIG. 15 is a flowchart of a method of wireless communication at a base station.
FIG. 16 is a flowchart of a method of wireless communication at a UE.
FIG. 17 is a flowchart of a method of wireless communication at a base station.
FIG. 18 is a flowchart of a method of wireless communication at a UE.
FIG. 19 is a flowchart of a method of wireless communication at a base station.
FIG. 20 is an example hardware implementation of a UE apparatus for performing various functions described herein.
FIG. 21 is an example hardware implementation of a base station apparatus for performing various function described herein.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the types of computer-readable media, or any other medium that can be used to store computer executable code in the form of instructions or data structures that can be accessed by a computer.

While aspects and implementations are described in this application by illustration to some examples, those skilled in the art will understand that additional implementations and use cases may come about in many different arrangements and scenarios. Innovations described herein may be implemented across many differing platform types, devices, systems, shapes, sizes, and packaging arrangements. For example, implementations and/or uses may come about via integrated chip implementations and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described innovations may occur. Implementations may range a spectrum from chip-level or modular components to non-modular, non-chip-level implementations and further to aggregate, distributed, or original equipment manufacturer (OEM) devices or systems incorporating one or more aspects of the described innovations. In some practical settings, devices incorporating described aspects and features may also include additional components and features for implementation and practice of claimed and described aspect. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). It is intended that innovations described herein may be practiced in a wide variety of devices, chip-level components, systems, distributed arrangements, aggregated or disaggregated components, end-user devices, etc. of varying sizes, shapes, and constitution.

The timing diagrams are generally not drawn to scale, and the timing pulses are generally shown in an enlarged, simplified manner to avoid obscuring concepts of the disclosure.

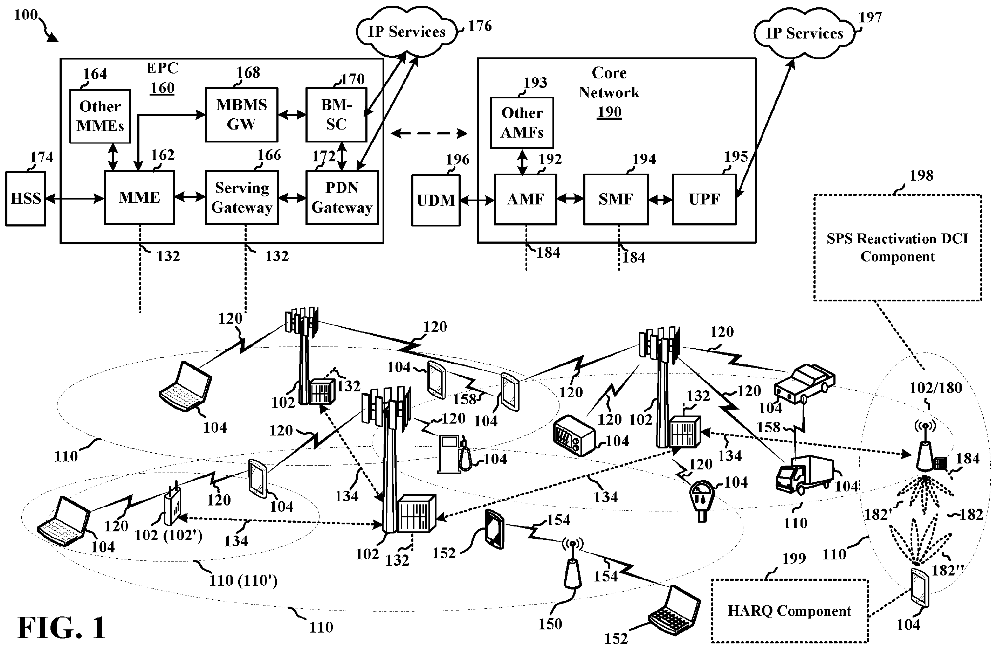

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G NR (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to *Y* MHz (e.g., 5, 10, 15, 20, 100, 400, etc. MHz) bandwidth per carrier allocated in a carrier aggregation of up to a total of *Yx* MHz (x component carriers) used for transmission in each direction. The carriers may or may not be adjacent to each other. Allocation of carriers may be asymmetric with respectto DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (P SBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 GHz unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicense d frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a Packet Switch (PS) Streaming (PSS) Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. In some scenarios, the term UE may also apply to one or more companion devices such as in a device constellation arrangement. One or more of these devices may collectively access the network and/or individually access the network.

Referring again to FIG. 1, in certain aspects, the base station 102/180 includes a SPS reactivation DCI component 198 configured to transmit a first and a second SPS reactivation DCI and receive HARQ feedback separately indicating detection of the received first SPS reactivation DCI and the received second SPS reactivation DCI from a UE 104. In certain aspects, the UE 104 includes a HARQ component 199 configured to receive a first and a second SPS reactivation DCI and transmit HARQ feedback separately indicating detection of the received first SPS reactivation DCI and the received second SPS reactivation DCI.

Although the following description may be focused on 5G NR, the concepts described herein may be applicable to other similar areas, such as LTE, LTE-A, CDMA, GSM, and other wireless technologies.

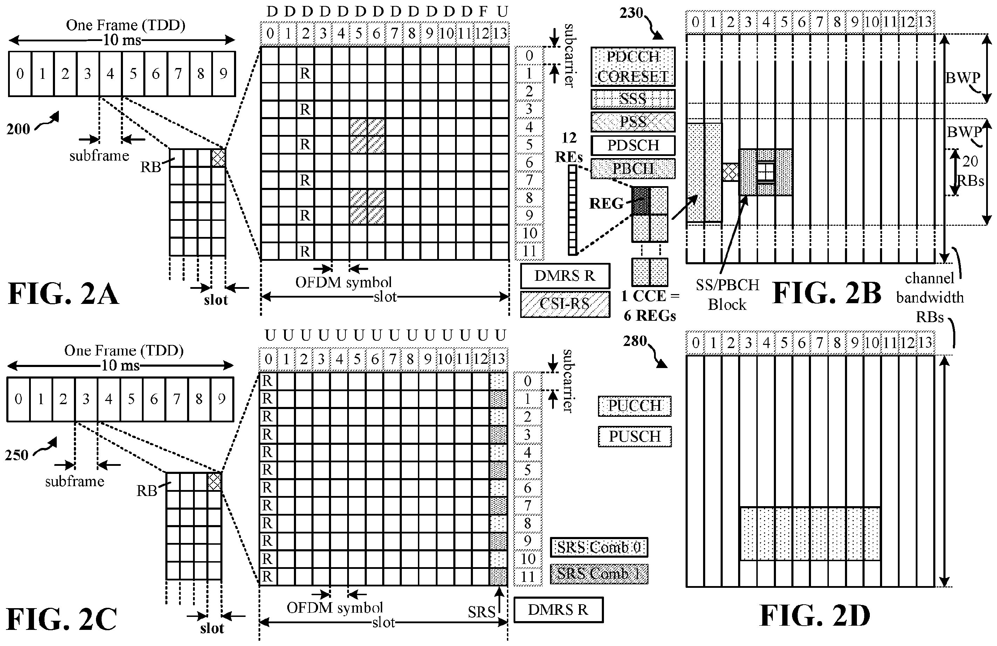

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 1 (with all UL). While subframes 3, 4 are shown with slot formats 1, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

FIGs. 2A-2D illustrate a frame structure, and the aspects of the present disclosure may be applicable to other wireless communication technologies, which may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 14 or 12 symbols, depending on whether the cyclic prefix (CP) is normal or extended. For normal CP, each slot may include 14 symbols, and for extended CP, each slot may include 12 symbols. The symbols on DL may be CP orthogonal frequency division multiplexing (OFDM) (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the CP and the numerology. The numerology defines the subcarrier spacing (SCS) and, effectively, the symbol length/duration, which is equal to 1/SCS.

| *µ* | **SCS** | **Cyclic prefix** |
|---|---|---|
| | Δ*f* = 2*^{µ}*·15 [kHz] | |
| 0 | 15 | Normal |
| 1 | 30 | Normal |
| 2 | 60 | Normal, Extended |
| 3 | 120 | Normal |
| 4 | 240 | Normal |

For normal CP (14 symbols/slot), different numerologies µ 0 to 4 allow for 1, 2, 4, 8, and 16 slots, respectively, per subframe. For extended CP, the numerology 2 allows for 4 slots per subframe. Accordingly, for normal CP and numerology µ, there are 14 symbols/slot and 2^{µ} slots/subframe. The subcarrier spacing may be equal to 2*^{µ}* * 15 kHz, where *µ* is the numerology 0 to 4. As such, the numerology µ=0 has a subcarrier spacing of 15 kHz and the numerology µ=4 has a subcarrier spacing of 240 kHz. The symbol length/duration is inversely related to the subcarrier spacing. FIGs. 2A-2D provide an example of normal CP with 14 symbols per slot and numerology µ=2 with 4 slots per subframe. The slot duration is 0.25 ms, the subcarrier spacing is 60 kHz, and the symbol duration is approximately 16.67 µs. Within a set of frames, there may be one or more different bandwidth parts (BWPs) (see FIG. 2B) that are frequency division multiplexed. Each BWP may have a particular numerology and CP (normal or extended).

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as R for one particular configuration, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs) (e.g., 1, 2, 4, 8, or 16 CCEs), each CCE including six RE groups (REGs), each REG including 12 consecutive REs in an OFDM symbol of an RB. A PDCCH within one BWP may be referred to as a control resource set (CORESET). A UE is configured to monitor PDCCH candidates in a PDCCH search space (e.g., common search space, UE-specific search space) during PDCCH monitoring occasions on the CORESET, where the PDCCH candidates have different DCI formats and different aggregation levels. Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) acknowledgment (ACK) (HARQ-ACK) feedback (i.e., one or more HARQ ACK bits indicating one or more ACK and/or negative ACK (NACK)). The PUSCH carries data, and may additionally be used to carry a buffer status report (BSR), a power headroom report (PHR), and/or UCI.

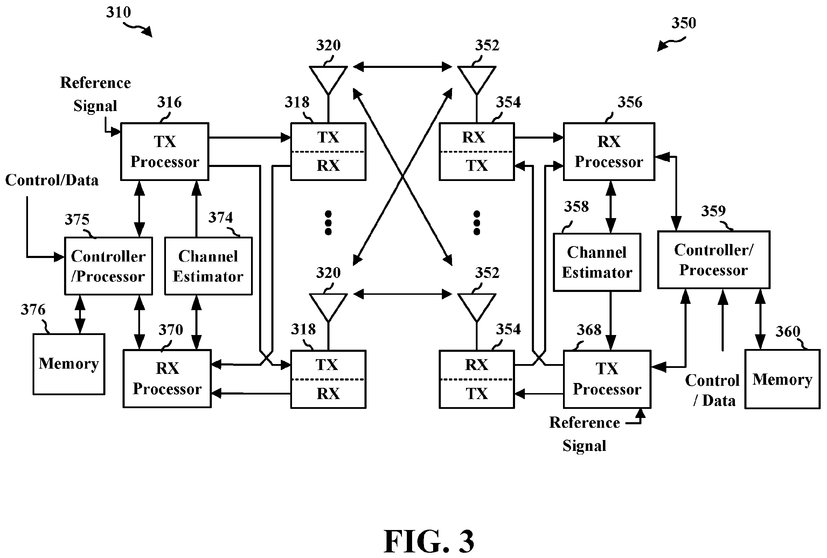

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318 TX. Each transmitter 318 TX may modulate a radio frequency (RF) carrier with a respective spatial stream for transmission.

At the UE 350, each receiver 354 RX receives a signal through its respective antenna 352. Each receiver 354 RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with 198 of FIG. 1.

At least one of the TX processor 316, the RX processor 370, and the controller/processor 375 may be configured to perform aspects in connection with 198 of FIG. 1.

In wireless communication systems, a base station may schedule a UE with semi-persistent scheduling. For example, the base station may use SPS for scheduling periodic resources for PDSCH transmissions from a base station to the UE. In some examples, SPS reactivation may be utilized to adjust one or more parameters of a previous SPS resources or configuration. SPS reactivation may be helpful for such applications as such as ultra reliable low latency (URLLC), one application of which is industrial Internet of things (IIoT) applications, among others.

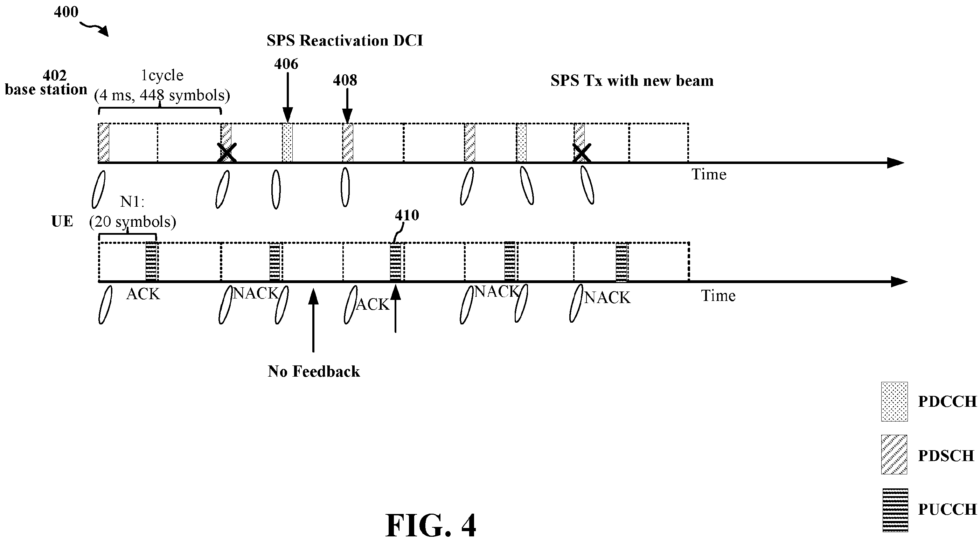

As illustrated in example communication 400 of FIG. 4, a base station 402 may communicate with a UE 404 by transmitting PDSCH using one or more SPS resources. The UE provides HARQ feedback, e.g., an ACK/NACK, for each periodic resource to inform the base station whether or not the UE received the PDSCH during the periodic resource. The base station 402 may begin SPS reactivation for a variety of reasons. For example, the base station may not successfully transmit data in a PDSCH for a defined number of symbols due to interference, channel condition change, or the like. The SPS reactivation may facilitate change of beam to improve the performance of communication between the base station 402 and the UE 404. The base station 402 may transmit a SPS reactivation DCI 406 to the UE 404, e.g., indicating a new beam for the SPS transmissions to the UE. The base station 402 may also transmit a SPS transmission 408 associated with a new beam to the UE 404. The UE 404 may transmit an acknowledgment 410 in response to receiving the SPS transmission 408. However, in some wireless communication systems, because the UE 404 may transmit the acknowledgment (ACK) 410 in response to receiving the SPS transmission 408 regardless of whether the SPS reactivation DCI 406 is received, the base station 402 would not have information regarding whether SPS reactivation DCI 406 is received. Additionally, the UE 404 may transmit a non-acknowledgment or negative acknowledgment (NACK) to the base station 402 due to a PDCCH error or due to a SPS PDSCH error with new SPS PDSCH configuration, introducing further ambiguity of information for the base station 402. In the illustrated example of FIG.4, the reactivation SPS DCI for PDSCH does not modify PUCCH parameters.

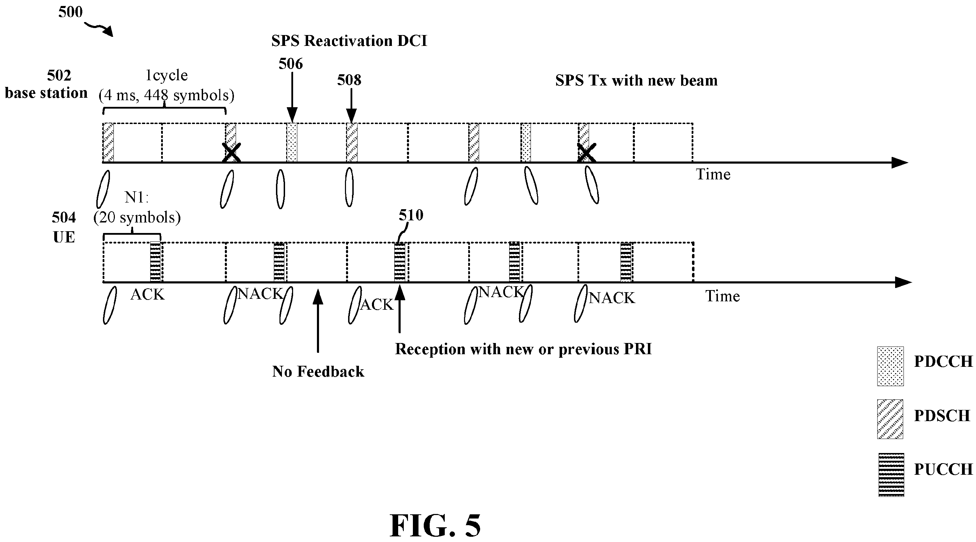

Similar to the communication 400, as illustrated in example communication 500 in FIG. 5 between a base station 502 and a UE 504, the base station 402 may transmit an SPS reactivation DCI 506 and a SPS transmission 508 to the UE 504. In the illustrated example of FIG. 5, the reactivation SPS DCI may modify PUCCH parameters such as PUCCH resource indicator (PRI). Such joint DL SPS PDSCH and UL PUCCH configurations modification may indicate a DL beam change and an equivalent UL beam change. The UE 504 may transmit an ACK 510 in response to receiving the SPS transmission 408. Because the UE 504 may transmit the ACK 510 in response to receiving the SPS transmission 508 and the reactivation SPS DCI for PDSCH does modify PUCCH parameters such as PRI, the transmission of the ACK 510 is associated with either the newly received PUCCH parameters or the previous PUCCH parameters. As a result, the base station 502 may be aware of whether the reactivation SPS DCI has been received by the UE 504.

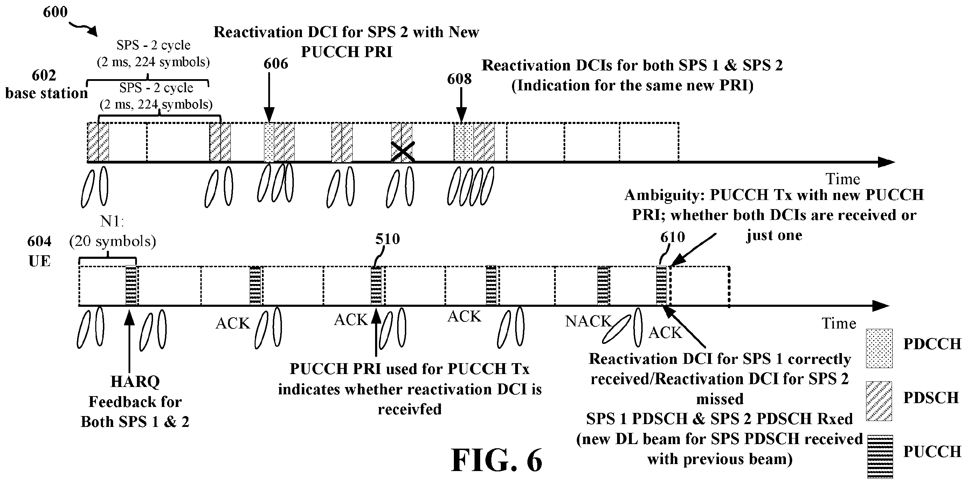

As illustrated in example communication 600 of FIG. 6, in certain wireless communication systems, such as in IIoT or URLLC environments, multiple SPSs may be configured or scheduled for the UE (e.g., as illustrated at 606). FIG. 6 illustrates SPS 1 and SPS 2. FIG. 6 also illustrates the base station sending an SPS reactivation for one SPS, e.g., the first reactivation DCI that is transmitted for SPS 2. FIG. 6 also illustrates the base station sending a first SPS reactivation DCI associated with only SPS 2 and a second SPS reactivation DCI 608 associated with both SPS 1 and SPS 2. Even if the SPS reactivation DCIs 606 and 608 modify PUCCH parameters, because the UE 604 may transmit an ACK 610 based on modified PUCCH parameters upon reception of the first SPS reactivation DCI 606 or the second SPS reactivation DCI 608, the base station 602 may not be aware of whether both or which one of the first and second SPS reactivation DCIs 606 and 608 are successfully received by the UE 604, resulting in ambiguity.

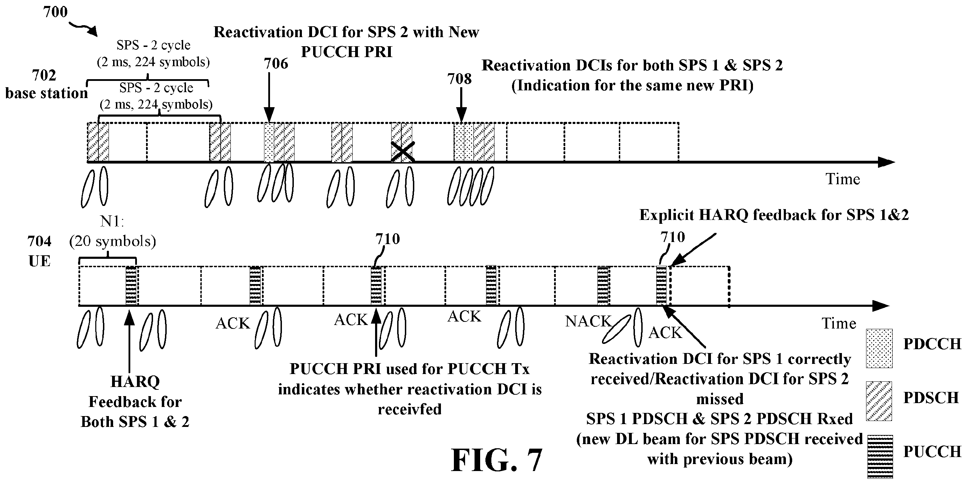

To resolve the ambiguity, as illustrated in example communication 700 of FIG. 7, a HARQ mechanism for SPS reactivation DCI is provided. The UE 704 is configured to provide a HARQ feedback 710 where the detection of the first reactivation SPS DCI 706 and the second reactivation SPS DCI 708 are separately indicated to the base station 702. As a result, the base station 702 would have information regarding whether the first reactivation SPS DCI 706 or the second reactivation SPS DCI 708 are successfully transmitted.

Table 1 illustrates example HARQ feedback for the SPS PDSCH for SPS 1 and SPS2. Table 2 illustrates an example of HARQ feedback for the SPS PDSCH for SPS1 and SPS 2 that also includes individual HARQ feedback that indicates whether an activation DCI for SPS 1 is received and whether an activation DCI for SPS 2 is received by the UE.

**TABLE 1**

| HARQ FEEDBACK CONTENT | |
|---|---|
| SPS 1 PDSCH | ACK/NACK |
| SPS 2 PDSCH | ACK/NACK |

**TABLE 2**

| HARQ FEEDBACK CONTENT | |
|---|---|
| SPS 1 PDSCH | ACK/NACK |
| SPS 2 PDSCH | ACK/NACK |
| (Re)Activation DCI SP S 1 | ACK/NACK |
| (Re)Activation DCI SPS 2 | ACK/NACK |

In the example for Table 2, at each SPS occasion, the UE will send feedback providing an ACK/NACK for each of a PDSCH for the corresponding SPS configuration and ACK/NACK feedback about whether an activation/reactivation DCI was received for the corresponding SPS configuration.

In some aspects, the SPSs associated with the first reactivation SPS DCI 706 or the second reactivation SPS DCI 708 may be associated with a single carrier. In some aspects, the SPSs associated with the first reactivation SPS DCI 706 or the second reactivation SPS DCI 708 may be SPSs in an IIoT environment. In some aspects, the SPSs associated with the first reactivation SPS DCI 706 or the second reactivation SPS DCI 708 may have a period of 2 milliseconds (ms) and a packet size of 40 bytes. A minimum UE processing time (N1) time N1 may be time for 20 symbols. In some aspects, the HARQ feedback 710 may include two indications (e.g., represented by two bits), one for each of the first reactivation SPS DCI 706 and second reactivation SPS DCI 708. In some aspects, the HARQ feedback 710 may further include additional indications separately indicating reception of SPS 1 and SPS 2 associated with the first reactivation SPS DCI 706 and second reactivation SPS DCI 708. In some aspects, the base station may provide an SPS release and then an SPS activation in order to indicate an SPS reconfiguration. The release and activation signaling may increase overhead and add delay to communication between the base station and UE. Additional delay may be incurred if the UE misses an SPS PDSCH release, because the UE may rely on both a release and an activation in order to apply the new configuration.

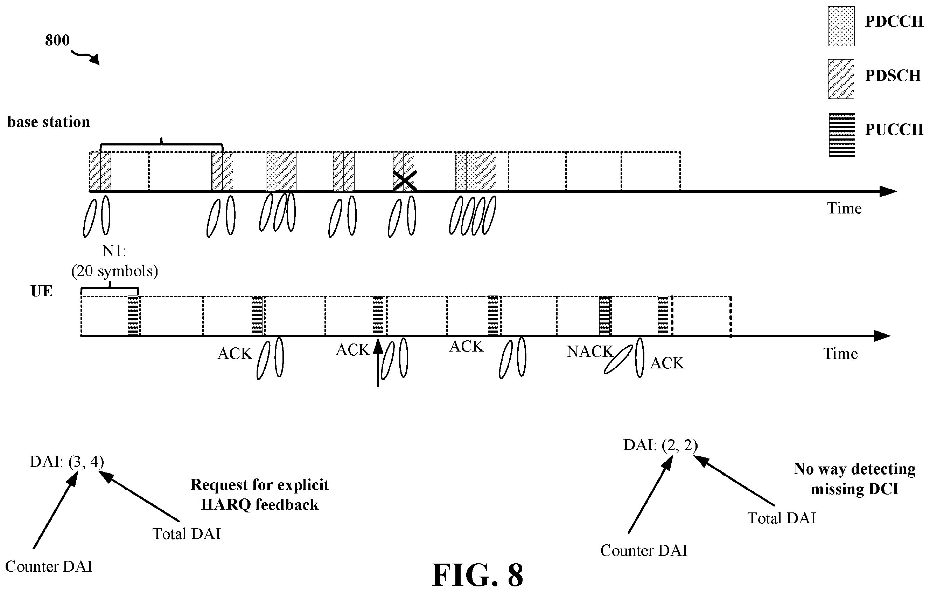

In some aspects, a downlink assignment index (DAI) for one or more SPSs physical data shared channels (PDSCHs) is also for the first SPS reactivation DCI 706 and the second SPS reactivation DCI 708. The DAI may be included in the first SPS reactivation DCI or the second SPS reactivation DCI. The DAI may include two bits for a PDCCH associated with SPS. In some aspects, the DAI may be of format DAI: (3, 4) with the former being counter DAI and the latter being total DAI as illustrated in 800 of FIG. 8. In some aspects, the DAI may include 8 bits if more than one serving cell are configured in the DL and the higher layer parameter network function instance (e.g., which may be referred to as a (*NFI)-TotalDAI-Included*) is enabled. Four most significant bits (MSBs) may be the counter DAI and the total DAI for the scheduled PDSCH group. Two intermediate bits may be the total DAI for a non-scheduled PDSCH group. Two least significant bits (LSBs) may be for PDCCH associated with non-scheduled PDSCH group.

SPS may be configured to optimize the use of radio resources by minimizing overhead for applications involving periodic communications, including relatively short bursts of periodic data. SPS may be used, among other applications, for VoIP in which voice data may be periodically exchanged over a period of time. SPS may also be used to manage Industrial IoT traffic, in which periodic transmissions of control signals or data bursts may commonly be scheduled by sensors, robots, controller, and other advanced network mechanisms to be utilized in more sophisticated factories in which network automation is commonplace. SPS may be advantageous for periodic signaling of these types of devices, to ensure that network latency is minimized for such applications that use generally persistent allocations of periodic data.

SPS may be established initially and periodically at layer 3 by the use of RRC commands. These RRC sessions can be enabled to initialize SPS commands, which in turn can allocate network resources to be used during ensuing SPS periods. In addition to the occurrence of RRC commands, the base station may use SPS activation and/or reactivation procedures at layer 1, for example, to allow the base station to control and allocate certain specific resources in a much faster manner (e.g., in or near real time) than the overhead that is consumed when dedicated RRC signaling is used for this purpose.

In some wireless communication systems, the network may be enabled to perform SPS activation and reactivation events in which the UE may be provided with the DCI during an SPS period to change the configuration of the downlink data channel (e.g., PDSCH) in the presence of downlink interference. The SPS reactivation cycle may allow the base station to transmit DCI for reconfiguring a subsequent PDSCH, e.g., to use a different set of PRBs, or to change receive beams or a modulation and coding scheme, such that the UE will be informed from the DCI to listen for data from the PDSCH newly configured. During successive SPS periods (including the initial SPS reactivation period), the newly configured PDSCH may be maintained on the downlink until otherwise changed by another SPS reactivation period, or by a subsequent RRC SPS session. Similarly, during the SPS activation/reactivation, the base station may transmit over the PDCCH an indication to the UE that the base station has changed the configuration of the PUCCH channel used by the UE to transmit responses such as acknowledgements (ACKs) and negative acknowledgments (NACKs).

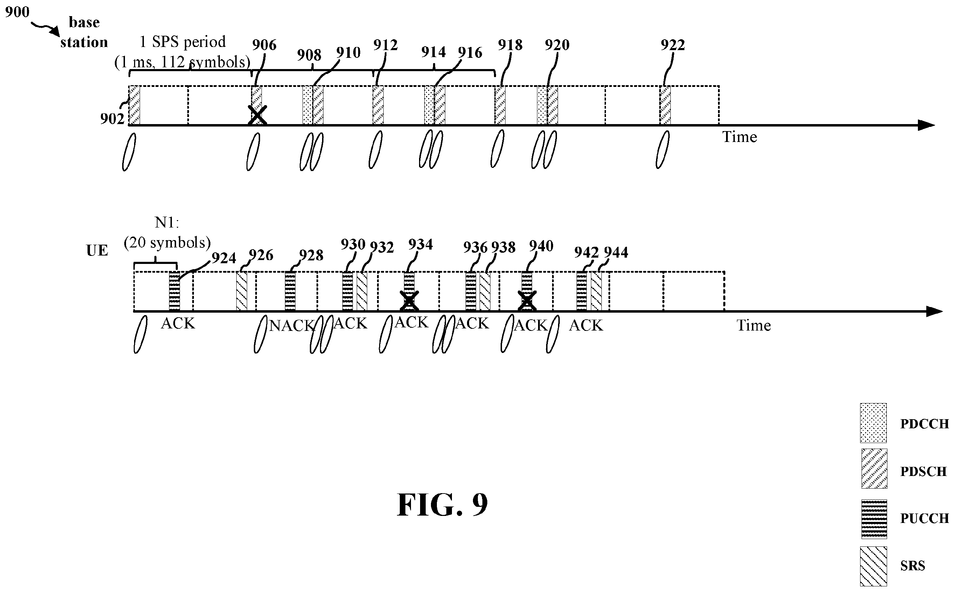

Under such mechanisms, a new PUCCH resource allocation sent by the base station on the PDCCH may be inapplicable to subsequent SPS periods. As a result, in subsequent SPS periods, after the PUCCH is changed during the SPS activation cycle, the UE may revert back to its default PUCCH configuration and may proceed to transmit information on the uplink that was experiencing interference. Under such mechanisms, the RRC (layer 3) configuration may provide SPS configuration information for both downlink PDSCH and uplink PUCCH. However, at layer 1, such as shown in FIG. 9, the downlink parameters may be updated by the DCI specifying a different PDSCH configuration while uplink parameters may be updated by the DCI specifying a different PDSCH configuration. By contrast, the layer 1 uplink parameters may not be updated beyond the SPS period in which the SPS reactivation signal is transmitted. After receiving a new PUCCH resource at one SPS reactivation signal, the UE may default to its uplink RRC configuration in subsequent cycles. Consequently, to avoid data errors in the face of interference, the base station may either stall the SPS periods in favor of connecting to the UE via another 2-4ms RRC session to change the current PUCCH resource allocation for the UE, or initiate an SPS reactivation at each SPS period (responsive, for example, to the base station evaluating the uplink conditions via the periodic SRS sent by the UE) in order to provide DCI for a new PDSCH configuration and a new PUCCH resource indicator for the UE. As described in more detail with reference to FIG. 9, both approaches can add significant latency to the SPS procedure, which may result in unrecoverable data errors and may incur overhead as the base station consumes additional bandwidth on each cycle to re-configure the PUCCH resource allocation for the UE.

FIG. 9 is a timing diagram 900 of an example SPS reactivation between a base station and a UE, followed by additional SPS periods. While a single base station and UE is shown, the concepts described may be equally applicable to a base station using time division multiplexing, for example, to schedule SPS sessions for a plurality of different UEs.

Referring now to FIG. 9, the timing diagram 900 shows at the base station a plurality of recurring SPS periods - a first 1 ms period, followed by a second period 908, a third period 914, and so on. While the values herein are purely for example purposes, the SPS period in this illustration may have a length of 1 ms or 112 symbols. The oval shape underneath the different transmission indicates transmit or receive beamforming, although in other configurations spatial division multiplexing may not be used and instead omnidirectional or other antenna types may be used. The SRS send by the UE is transmitted with the same beam(s) as the beam(s) used for the uplink transmission of SPS PUCCH messages, and may be to transmit using the same PRBs as the PUCCH. The reactivation DCI transmitted in the PDCCH for configuring the SPS PDSCH channel may be accompanied by a new PUCCH resource indicator for modifying PUCCH parameters for the ACK/NACK during that period only. A prior RRC session may previously defined the current channel configurations such that the PDSCH uses PRBs and other network attributes previously assigned.

At the beginning of the SPS 1ms period, the base station may transmit data 902 on PDSCH corresponding to the periodic data sent to the UE consistent with whatever activity is ongoing that necessitated the SPS session. The UE 924 may respond within twenty symbols with an ACK over the PUCCH default configuration. The UE may also be able to transmit its own uplink data at scheduled intervals during the SPS session.

Towards the end of the initial SPS period, the UE also transmits an SRS 926 using the same beam and configuration as used with PUCCH. The SRS is a UE uplink transmission that includes an uplink pilot signal to enable the base station to perform channel estimation at different frequencies and to use the received signal for uplink scheduling. The SRS may be transmitted by the UE at the request of the network. Based on the difference of the signal strength and quality received versus the strength and quality the base station expected to receive from its own assessment of channel conditions and prior communications with the UE, the base station can estimate the channel quality. The base station can also configure the channel estimates for the UE to cause the UE to transmit on the uplink. For example, the base station may specify at what power the UE may transmit data on a particular channel.

At the beginning of the second SPS period 908, the base station may transmit data signal 906 on the PDSCH. The base station may have detected the presence of downlink interference which in turn causes degradation of the data signal 906 sent over PDSCH. As a result of the downlink interference, the UE may be unable to decode the data packets sent at 906 on the PDSCH. The UE may send a NACK 928 back to the base station.

In the base station's anticipation of a response from the UE (NACK 928), the base station may further detect uplink interference occurring at the UE-allocated frequencies of the PUCCH, which in turn may result in the base station's failure to receive the NACK. In some aspects, the network's failure to receive a response (NACK or otherwise) to its transmission is interpreted as NACK. During period 908, the base station initiates an SPS reactivation DCI transmission 910 at the downlink control channel (PDCCH). Because the last transmission failed, the base station may attempt to adapt the link to enable the successful retransmission of the downlink packet. The network may provide DCI to the UE in the PDCCH portion of the transmission 910 indicating that the configuration of the subsequent PDSCH (the signal immediately after the PDCCH transmission in the transmission 910) channel may be changed to attempt to correct the downlink interference. For instance, the DCI in the PDCCH signal may indicate to the UE that the base station is using different PRBs for the PDSCH in the transmission 910 than were previously used in the prior transmission at 906, to attempt to avoid the downlink interference.

In addition, based on the base station's awareness of uplink interference on the currently configured PUCCH, the base station may include in its PDCCH message in the transmission 910, in addition to the DCI specifying different PRBs for the PDSCH, a newly-configured PUCCH resource (in lieu of the current RRC-allocated PUCCH resource) that the UE can use to acknowledge that it received the data on the newly-configured PDSCH. The PUCCH resource is limited to period 908.

In one example configuration, the UE may successfully receive both the PDCCH transmission 910 and the data transmission on the newly-configured PDSCH, and the UE may send an ACK 930 using the new PUCCH configuration. Here, it is assumed that there is no uplink interference due to the UE using the new PUCCH resource.

Another SRS signal 932 may be transmitted near the end of the cycle (e.g., period 908) by the UE. The SRS signal 932 may be used to detect a constant level of uplink interference at the original PUCCH configuration. The base station may be aware of the interference if, for example, it did not receive the NACK 928.

The base station may then send data in a transmission 912 on the newly configured PDSCH at the beginning of period 914. During the previous period, it was noted that the base station had changed the PUCCH resource configuration. However, after the initial SPS cycle, the UE returns to using the same default PUCCH configuration from a prior RRC session that it used for sending the NACK 928. Because this configuration had already been associated with a constant interference, the problem with the current SPS specification is readily apparent.

As one possible outcome, the base station may conclude that the UE did not receive the data in the transmission 910, the base station may send a retransmission of the same data. This transmission may contribute to system overhead.

If the SPS transmission was not received, the UE may be using its original RRC configuration for PUCCH to attempt to decode one or both of the transmissions 910 and 912 in the respective second and third SPS periods 908 and 914. As another possible outcome, if the base station's change to the configuration of PDSCH during its transmission over PDCCH was relatively minor (e.g., it did not involve a big frequency shift), the UE may still be able to decode the data received on the PDSCH at 910 or 912. The UE may send an ACK 934 using the previous RRC-configured PUCCH. While in this example the UE was able to successfully decode the data, the ACK 934 may be perceived by the base station as an error. For example, the base station may use the SRS signals to conclude that the constant uplink interference in the vicinity of the UE resulted in a transmission error even if the data at 912 was properly decoded and sent to the upper layers.

Thus, the transmission at 912 may be deemed as skippable transmission since the base station may conclude that the ACK 934 was an error. Continuing in SPS period 914, the base station may attempt to remedy the problem by transmitting another SPS reactivation DCI and new PUCCH resource indicator in a message 916, followed by a retransmission of the same data in the PDSCH message. At the outset, if the transmission was already received and decoded, the retransmission of the same data results in additional overhead. Therefore, the combined DCI/PUCCH resource indicator and data in the message 916 may be another latency-adding transmission to the extent the base station is attempting to resend data that was already received.

Referring back to the message 916, the UE may reconfigure its PUCCH in response to the PUCCH resource indicator in the message 916, and may adjust its receive parameters responsive to the DCI to receive the data at the specified frequencies in the PDSCH in the message 916. The UE may use the downlink and uplink resources specified in the PDCCH message to properly decode the data and to transmit an ACK 936 free of interference. It may then send another SRS 938.

This cycle of otherwise skippable signals may continue into another cycle in a similar manner for the data sent in the next SPS cycle on the PDSCH 918. Here again, the UE may use the PUCCH resources from the original RRC setup, and may send an ACK 940 that likewise may be interpreted as an ACK error. That is, the UE may correctly decode the data at 920 and send an ACK at 942, but the ACK may be acknowledged to be an error as the base station may use the SRS transmissions to determine the ACK was transmitted using a PUCCH subject to significant uplink interference.

This may again trigger another skippable SPS Reactivation (DCI transmission and another uplink allocation) and subsequent data transmission 920, similar to the events at 916. An ACK 942 may be sent using the new PUCCH configured at the PDCCH SPS reactivation, but if the data was decoded earlier, the transmission is skippable. The UE may then send another SRS signal 944 which may indicate to the base station whether the network conditions are adequate.

At 922, an SPS reconfiguration is initiated at the RRC level after a series of erratic transmissions that can delay the SPS data exchange, and can result in data loss. The RRC reconfiguration period may reconfigure the channels in light of the conditions, at the expense of further added latency of approximately 3-4 ms.

FIG. 9 demonstrates a configuration where the constant uplink interference required the base station to issue multiple reactivations so that the UE can use an updated PUCCH configuration to send uplink acknowledgments without interference. Despite the continued interference at the UE's original allocated uplink configuration, the base station may be unable to dynamically change the uplink allocation on a more regular basis, which may otherwise avoid the incurred overhead. The constant uplink interference detected by the base station using the SRS signals (among other signals) may cause inefficiency to the system in FIG. 9 by causing the network to correct the PUCCH configuration even if one configuration the packet had been decoded. The UE may then return to its original noisy PUCCH condition after the end of every SPS reactivation cycle. The pattern may result in resources wasted on the downlink, due to either the NACKs that were received or the ACKS incorrectly deemed to be in error based on the SRS feedback, both of which resulted in multiple retransmissions and SPS reactivation cycles.

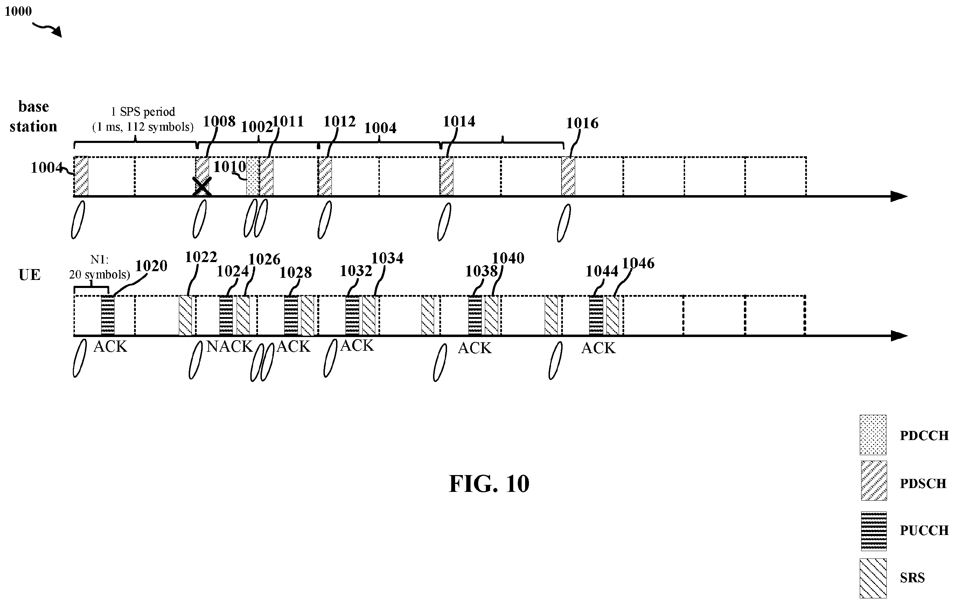

Some aspects presented herein improve the efficiency of wireless communication systems by adding dynamic uplink resource capability for the UE. In some cases, a data field including a SPS PUCCH resource list (e.g., which may be referred to as an *"SPS-PUCCH-AN-List"*) may be transmitted as data during a downlink to the UE to provide multiple PUCCH configurations for the UE to use during an SPS session. Alternatively, a PUCCH access network message (e.g., which may be referred to as an *"n1PUCCH-AN"* message) may be provided to the UE as part of the control information to inform the UE of which PUCCH to use, which in turn can be changed every few milliseconds using another RRC session. Either of these possibilities may be used to provide the initial PUCCH configuration information. However, neither of these possibilities address the underlying problems identified with reference to FIG. 9. In the example of FIG. 10, below, these RRC transmissions may not provide the UE with a list of PUCCH configurations, and that the UE may receive its SPS-configured information, including the initial PUCCH, during an initial RRC session.

Accordingly, in some aspects, an additional information field may be added to the layer 1 PDCCH. The additional information field may include the DCI to adjust the PDSCH configuration and may also include an additional field to enable the base station to modify the PUCCH configuration parameters following an SPS activation/reactivation period for any duration deemed to be appropriate. In one configuration, an SPS reactivation signal may direct the UE to change its PUCCH configuration for all subsequent SPS periods unless and until the PUCCH configuration is subsequently changed by an RRC session or by another SPS reactivation. The additional field according may provide data indicating a number of cycles or periods to which the change to the uplink PUCCH is applicable. This data may include, for example, a base station specified configuration of the PUCCH (e.g., different PRBs, transmit beams, and other channel parameters) and a number of SPS periods or cycles in which the PUCCH is to remain at that specified configuration. The data may alternatively or additionally indicate a time period during which the PUCCH will remain active in SPS periods, which may constructively indicate the number of periods or cycles. In some aspects, the UE may continue to use the specified uplink channel configuration for the specified length of time/number of cycles until some specified expiration time or period, or until the base station provide s another reactivation cycle which changes the PUCCH configuration prior to the specified expiration.

If the PUCCH configuration remains unchanged for the specified number of cycles, then the UE may revert to the initial PUCCH configuration from the RRC session at the beginning of the SPS session. Alternatively, at the expiration of the period, the UE may be directed by the UE or otherwise may default to one PUCCH configuration of a list of possible configurations. The base station may continue to assess channel conditions using the SRS to optimize both the uplink and downlink configurations, changing the uplink configuration where appropriate.

FIG. 10 is a timing diagram 1000 of an example SPS reactivation between a base station and UE.

Beginning at a first SPS period/cycle of 1ms, the base station may transmit SPS data over the PDSCH channel at 1004. After a period N1 of twenty symbols, for example, the UE may send an acknowledgment 1020 of properly decoded data. The UE may also send the SRS to the base station 1022.

During the next cycle 1002, the base station may send data using the same channel configuration on the PDSCH channel at 1008. The channel conditions may have changed, and the UE may be unable to decode the data from 1008. The UE may accordingly send a NACK 1024 on the PUCCH as configured by an initial RRC session (and sends another SRS 1026).

At 1002, the UE may send on the PDCCH channel (i) an SPS reactivation DCI (for example, specifying an SPS PDSCH downlink configuration change via newly specified PRBs, beams, and other channel parameters), and (ii) a new PUCCH configuration change (for example, specifying as appropriate an SPS PUCCH uplink configuration change via newly specified PRBs, beams, or the like) along with a condition. The optional condition may be an indication of whether the newly configured PUCCH resource may be applicable to one, two, or another specified number or time duration, or all subsequent (SPS A/N) PUCCHs until a defined situation occurs (such as until another SPS reactivation is performed or until an RRC signaling period occurs). If there is no condition, the UE may be configured to use the new PUCCH configuration unless it is later changed. In some aspects, the UE may be configured to use the newly allocated PUCCH configuration once, and then return to the prior configuration unless a condition indicates otherwise.

Referring back to FIG. 10, for example, it is assumed that the SRS 1026 indicates to the base station the current PUCCH resource is experiencing inter-cell interference. The base station will transmit the SPS reactivation DCI and uplink PUCCH information, depending on these channel conditions. Upon identifying the PUCCH as newly configured along with data indicating a number of periods/cycles the new PUCCH remains active, the base station sends this information on the current PDCCH. Upon receiving this transmission, the UE may accordingly adjust its new receive parameters for receiving the SPS data on the allocated PDSCH 1011. The UE may then identify the new PUCCH configuration and the optional data indicating the extent of applicability of the new configuration. The UE may then transmit an ACK 1028 using the specified PUCCH configuration.

If the channel estimates by the base station are consistent throughout the duration of the SPS periods shown, the base station may proceed to transmit shared data over the PDSCH as configured by the RRC resources or by the DCI, as shown by the transmissions of 1012, 1014, and 1016. In response the UE receives the data and sends ACKs at 1032, 1038 and 1044. Meanwhile, the SRS transmissions at 1034, 1040, and 1046 continue to indicate channel conditions, and the SPS proceeds smoothly. A single reactivation 1010 may be used, and at most one data retransmission for the PDSCH 1011 may be used. Therefore, overhead may be substantially reduced.

For example, if a UE is not provided SPS-PUCCH-AN-List and transmits HARQ-ACK information corresponding to a PDSCH reception without a corresponding PDCCH, a PUCCH resource for corresponding PUCCH transmission with HARQ-ACK information may be provided by a parameter n1PUCCH-AN or by a latest PUCCH configuration. in the latest PDCCH.

For example, as noted with reference to FIG. 10, the uplink information described above may be modified and may remain at the same level for an arbitrary number of SPS periods (cycles) until an SPS reactivation changes the uplink information.

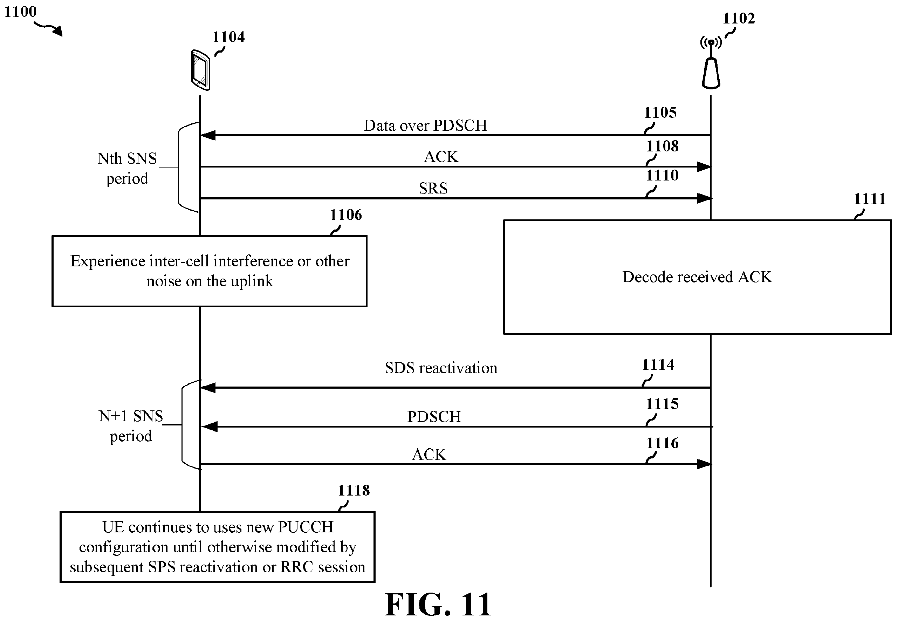

FIG. 11 is a timing diagram of example SPS periods 1100 involving an exchange of signals between the UE 1104 and the base station 1102. During the Nth SPS period, the base station 1102 may transmit SPS data 1105 over the PDSCH channel to the UE 1104. The UE 1104 may send an ACK back to the base station 1102 at 1108. The UE may also send an SRS signal 1110, such as by using the same channel resources used by the UE 1104 to send the ACK, although the network can use a different configuration.

As noted in 1106, the UE may be beginning to experience increased inter-cell interference on the uplink. In 1111, the base station may recognize the increased uplink interference and was just able to decode the ACK on the existing PUCCH channel. Based on channel measurements made by the base station and other criteria, a channel resource allocation is determined by the network, and the base station proactively performs another SPS reactivation before the uplink interference results in data loss.

The base station 1102 may transmit the SPS reactivation signal 1114 over the downlink control channel. The signal may specify a new PUCCH configuration which may include frequencies not affected by the current interference. The protocol may be that the new PUCCH is adopted by the UE 1104 and may be used for all successive SPS periods (which includes the current N+1 period), until the value is changed by another SPS reactivation signal from the base station 1102, or a new RRC signaling session changes the value.

Accordingly, in the N+1 SPS period, the base station 1102 (e.g., the base station) may transmit an SPS reactivation signal 1114 over the PDCCH which includes the newly configured PUCCH data. The UE 1104 may receive the downlink control channel transmission. The base station 1102 may also transmit the data over the PDSCH 1115. The UE 1104 may receive the data and accordingly transmits an ACK 1116 to the base station 1102 using the new PUCCH configuration. In 1118, the UE 1104 may continue to use the new PUCCH configuration until otherwise instructed by the base station 1102.

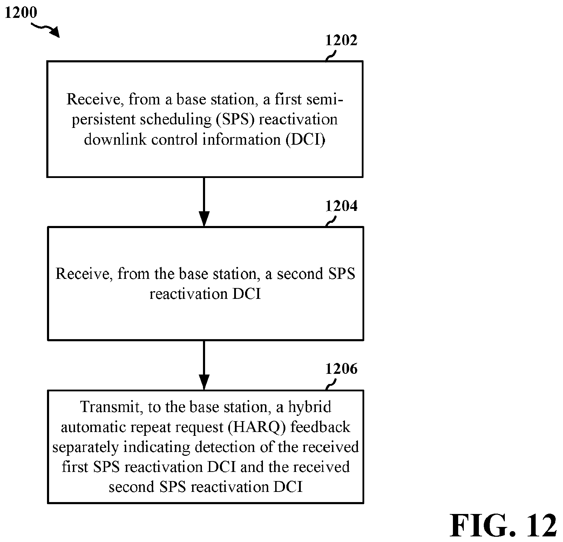

FIG. 12 is a flowchart 1200 of a method of wireless communication. The method is performed by a UE (e.g., the UE 104; the UE 404, 504, 604, 704, 1104, or the like). The method may be used for improving efficiency of SPS reactivation process.

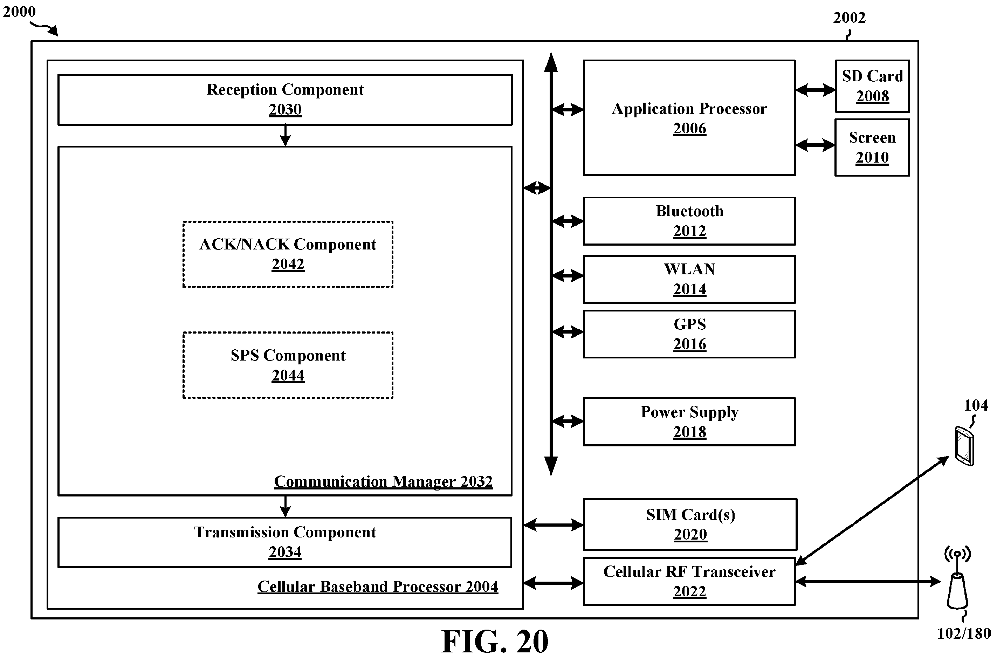

At 1202, the UE receives, from a base station, a first SPS reactivation DCI. The reception at 1202 may include aspects described in connection with 706 of FIG. 7. For example, the UE 704 may receive a first reactivation DCI 706 from the base station 702. In some aspects, the first SPS reactivation DCI and the second SPS reactivation DCI are for a PDSCH. In some aspects, the first SPS reactivation DCI or the second SPS reactivation DCI modifies one or more PUCCH parameters including a PRI. For example, 1202 may be performed by the SPS component 2044 in FIG. 20.

At 1204, the UE receives, from the base station, a second SPS reactivation DCI. The reception at 1204 may include aspects described in connection with 708 of FIG. 7. For example, the UE 704 may receive a second reactivation DCI 708 from the base station 702. In some aspects, a DAI for one or more SPS PDSCHs is also for the first SPS reactivation DCI and the second SPS reactivation DCI. The DAI may be included in the first SPS reactivation DCI or the second SPS reactivation DCI. The DAI may comprise two bits for a PDCCH associated with SPS. In some aspects, the first SPS reactivation DCI or the second SPS reactivation DCI includes a field of type SPS configuration index. In some aspects, a first set of PUCCH resources is associated with the first SPS and a second set of PUCCH resources is associated with the second SPS. For example, 1204 may be performed by the SPS component 2044 in FIG. 20.

At 1206, the UE transmits, to the base station, a HARQ feedback separately indicating detection of the received first SPS reactivation DCI and the received second SPS reactivation DCI. For example, the UE 704 may transmit ACK 710 to the base station 702. The transmission at 1206 may include aspects described in connection with 710 of FIG. 7. The HARQ feedback comprises a first indication indicating reception of the received first SPS reactivation DCI and a second indication indicating reception of the received second SPS reactivation DCI. In some aspects, the HARQ feedback further comprises a third indication indicating whether a first SPS PDSCH associated with the first SPS reactivation DCI was received and a second set of symbols indicating whether a second SPS PDSCH associated with the second SPS reactivation DCI was received. For example, 1206 may be performed by the ACK/NACK component 2042 in FIG. 20.

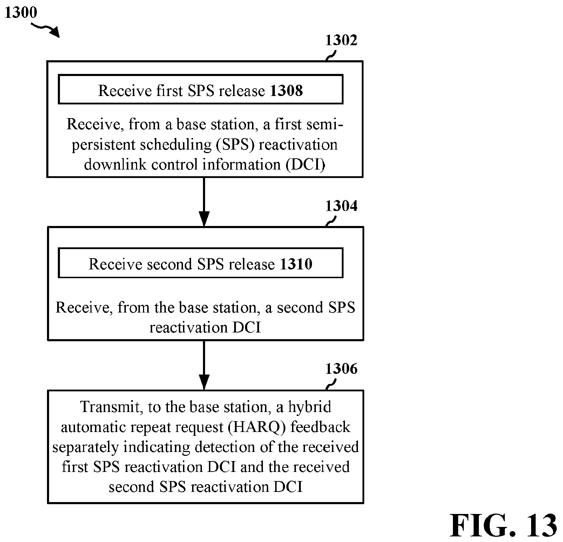

FIG. 13 is a flowchart 1300 of a method of wireless communication. The method may be performed by a UE (e.g., the UE 104; the UE 404, 504, 604, 704, 1104, or the like). The method may be used for improving efficiency of SPS reactivation process.

At 1302, the UE may receive, from a base station, a first SPS reactivation DCI. The reception at 1302 may include aspects described in connection with 706 of FIG. 7. For example, the UE 704 may receive a first reactivation DCI 706 from the base station 702. In some aspects, the first SPS reactivation DCI and the second SPS reactivation DCI are for a PDSCH. In some aspects, the first SPS reactivation DCI or the second SPS reactivation DCI modifies one or more PUCCH parameters including a PRI. For example, 1302 may be performed by the SPS component 2044 in FIG. 20.

At 1304, the UE may receive, from the base station, a second SPS reactivation DCI. The reception at 1304 may include aspects described in connection with 708 of FIG. 7. For example, the UE 704 may receive a second reactivation DCI 708 from the base station 702. In some aspects, a DAI for one or more SPS PDSCHs is also for the first SPS reactivation DCI and the second SPS reactivation DCI. The DAI may be included in the first SPS reactivation DCI or the second SPS reactivation DCI. The DAI may comprise two bits for a PDCCH associated with SPS. In some aspects, the first SPS reactivation DCI or the second SPS reactivation DCI includes a field of type SPS configuration index. In some aspects, a first set of PUCCH resources is associated with the first SPS and a second set of PUCCH resources is associated with the second SPS. For example, 1304 may be performed by the SPS component 2044 in FIG. 20.

At 1306, the UE may transmit, to the base station, a HARQ feedback separately indicating detection of the received first SPS reactivation DCI and the received second SPS reactivation DCI. For example, the UE 704 may transmit ACK 710 to the base station 702. The transmission at 1306 may include aspects described in connection with 710 of FIG. 7. In some aspects, the HARQ feedback comprises a first indication indicating reception of the received first SPS reactivation DCI and a second indication indicating reception of the received second SPS reactivation DCI. In some aspects, the HARQ feedback further comprises a third indication indicating whether a first SPS PDSCH associated with the first SPS reactivation DCI was received and a second set of symbols indicating whether a second SPS PDSCH associated with the second SPS reactivation DCI was received. For example, 1306 may be performed by the ACK/NACK component 2042 in FIG. 20.

In some aspects, the UE may receive, at 1308, a first SPS release for a first SPS prior to receiving the first SPS reactivation DCI. In some aspects, the UE may receive, at 1310, a second SPS release for a second SPS prior to receiving the second SPS reactivation DCI.

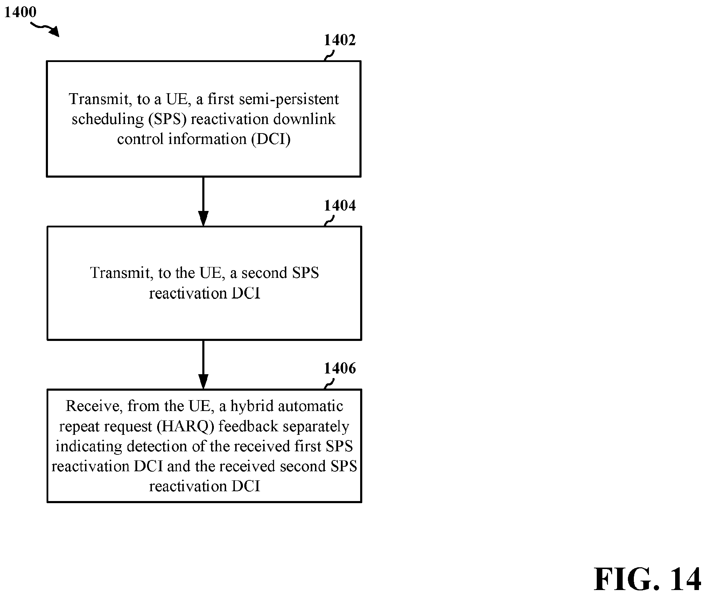

FIG. 14 is a flowchart 1400 of a method of wireless communication. The method is performed by a base station (e.g., the base station 102/180; the base station 402, 502, 602, 702, 1102, or the like). The method may be used for improving efficiency of SPS reactivation process.

At 1402, the base station transmits, to a UE, a first SPS reactivation DCI. The transmission at 1402 may include aspects described in connection with 706 of FIG. 7. For example, the base station 702 may transmit the first SPS reactivation DCI 706 to the UE 704. In some aspects, the first SPS reactivation DCI and the second SPS reactivation DCI are for a PDSCH. In some aspects, the first SPS reactivation DCI or the second SPS reactivation DCI modifies one or more PUCCH parameters including a PRI. In some aspects, 1402 may be performed by the SPS component 2142.

At 1404, the base station transmits, to the UE, a second SPS reactivation DCI. The transmission at 1404 may include aspects described in connection with 708 of FIG. 7. For example, the base station 702 may transmit the second SPS reactivation DCI 708 to the UE 704. In some aspects, a DAI for one or more SPS PDSCHs is also for the first SPS reactivation DCI and the second SPS reactivation DCI. The DAI may be included in the first SPS reactivation DCI or the second SPS reactivation DCI. The DAI may comprise two bits for a PDCCH associated with SPS. In some aspects, the first SPS reactivation DCI or the second SPS reactivation DCI includes a field of type SPS configuration index. In some aspects, a first set of PUCCH resources is associated with the first SPS and a second set of PUCCH resources is associated with the second SPS. In some aspects, 1404 may be performed by the SPS component 2142.

At 1406, the base station receives, from the UE, a HARQ feedback separately indicating detection of the received first SPS reactivation DCI and the received second SPS reactivation DCI. The reception at 1406 may include aspects described in connection with 710 of FIG. 7. For example, the base station 702 may receive the HARQ feedback 710 from the UE 704. The HARQ feedback comprises a first indication indicating reception of the received first SPS reactivation DCI and a second indication indicating reception of the received second SPS reactivation DCI. In some aspects, the HARQ feedback further comprises a third indication indicating whether a first SPS physical data shared channel (PDSCH) associated with the first SPS reactivation DCI was received and a second set of symbols indicating whether a second SPS PDSCH associated with the second SPS reactivation DCI was received. In some aspects, 1404 may be performed by the HARQ component 2144.

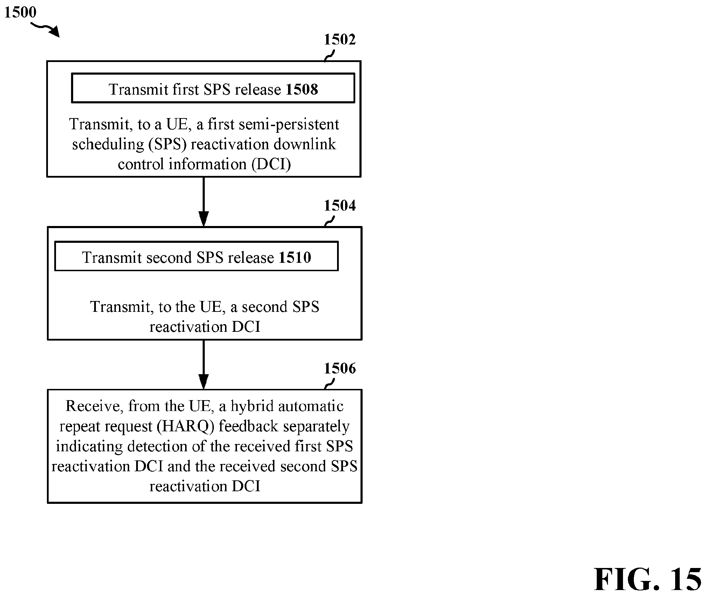

FIG. 15 is a flowchart 1500 of a method of wireless communication. The method may be performed by a base station (e.g., the base station 102/180; the base station 402, 502, 602, 702, 1102 or the like). The method may be used for improving efficiency of SPS reactivation process.

At 1502, the base station may transmit, to a UE, a first SPS reactivation DCI. The transmission at 1502 may include aspects described in connection with 706 of FIG. 7. For example, the base station 702 may transmit the first SPS reactivation DCI 706 to the UE 704. In some aspects, the first SPS reactivation DCI and the second SPS reactivation DCI are for a PDSCH. In some aspects, the first SPS reactivation DCI or the second SPS reactivation DCI modifies one or more PUCCH parameters including a PRI. In some aspects, 1502 may be performed by the SPS component 2142.

At 1504, the base station may transmit, to the UE, a second SPS reactivation DCI. The transmission at 1504 may include aspects described in connection with 708 of FIG. 7. For example, the base station 702 may transmit the second SPS reactivation DCI 708 to the UE 704. In some aspects, a DAI for one or more SPS PDSCHs is also for the first SPS reactivation DCI and the second SPS reactivation DCI. The DAI may be included in the first SPS reactivation DCI or the second SPS reactivation DCI. The DAI may comprise two bits for a PDCCH associated with SPS. In some aspects, the first SPS reactivation DCI or the second SPS reactivation DCI includes a field of type SPS configuration index. In some aspects, a first set of PUCCH resources is associated with the first SPS and a second set of PUCCH resources is associated with the second SPS. In some aspects, 1504 may be performed by the SPS component 2142.

At 1506, the base station may receive, from the UE, a HARQ feedback separately indicating detection of the received first SPS reactivation DCI and the received second SPS reactivation DCI. The reception at 1506 may include aspects described in connection with 710 of FIG. 7. For example, the base station 702 may receive the HARQ feedback 710 from the UE 704. In some aspects, the HARQ feedback comprises a first indication indicating reception of the received first SPS reactivation DCI and a second indication indicating reception of the received second SPS reactivation DCI. In some aspects, the HARQ feedback further comprises a third indication indicating whether a first SPS PDSCH associated with the first SPS reactivation DCI was received and a second set of symbols indicating whether a second SPS PDSCH associated with the second SPS reactivation DCI was received. In some aspects, 1504 may be performed by the HARQ component 2144.

In some aspects, the base station may transmit, at 1508, a first SPS release for a first SPS prior to transmitting the first SPS reactivation DCI. In some aspects, the base station may transmit, at 1510, a second SPS release for a second SPS prior to transmitting the second SPS reactivation DCI.

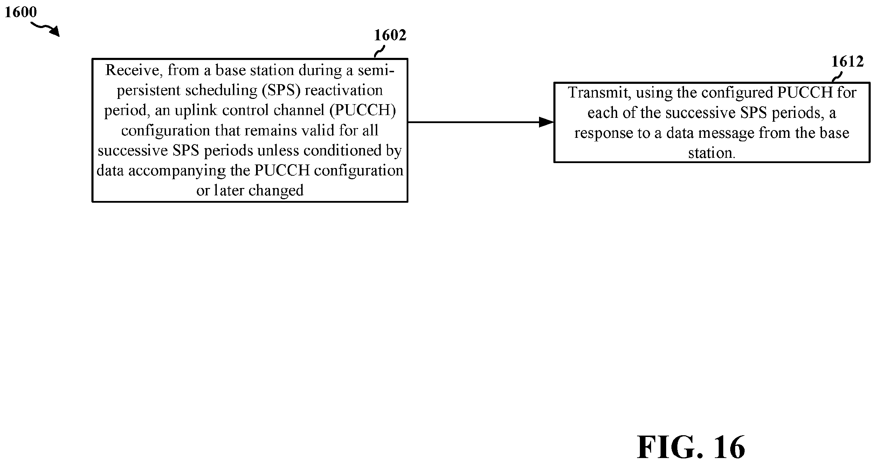

FIG. 16 is a flowchart 1600 of a method of wireless communication. The method may be performed by a UE (e.g., the UE 104, the UE 1104, or the like). At 1602, the UE may receive, from a base station during a SPS reactivation period, an PUCCH configuration that remains valid for all successive SPS periods unless conditioned by data accompanying the PUCCH configuration or later changed. The conditions that may be transmitted on the PDCCH may include those mentioned in connection with FIG. 10, such as allocating the uplink control channel information for a designated number of SPS periods, or indefinitely for the SPS session unless the UE receives different instructions. For example, the UE 1104 may receive a PUCCH configuration from a base station 1102. In some aspects, 1602 may be performed by the SPS component 2044 in FIG. 20.

At 1612, the UE may transmit, using the configured PUCCH for each of the successive SPS periods, a response to a data message from the base station. In some aspects, 1612 may be performed by the ACK/NACK component 2042 in FIG. 20. For example, the UE 1104 may transmit a response to the base station 1102.

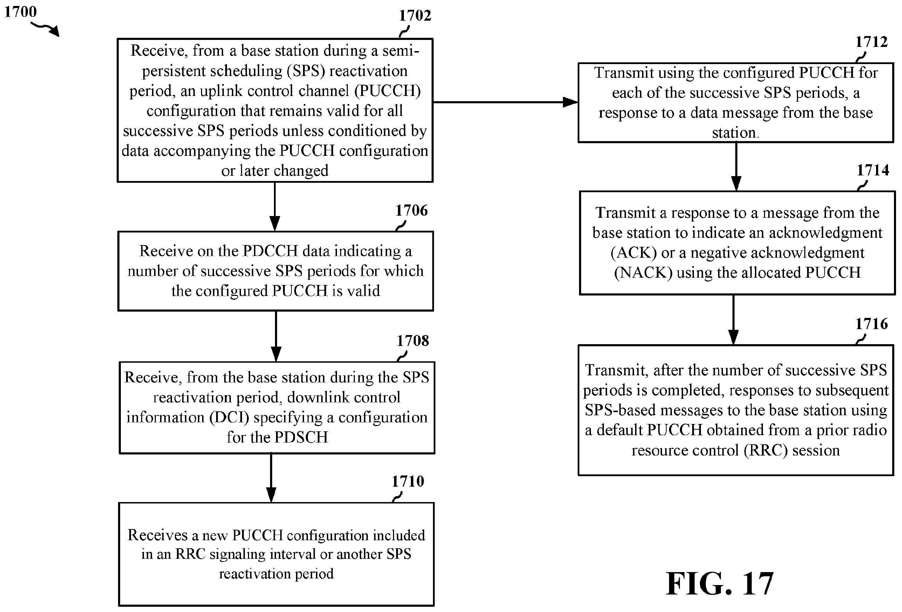

FIG. 17 is a flowchart 1700 of a method of wireless communication. The method may be performed by a UE (e.g., the UE 104, the UE 1104, or the like). At 1702, the UE may receive, from a base station during a SPS reactivation period, an PUCCH configuration that remains valid for all successive SPS periods unless conditioned by data accompanying the PUCCH configuration or later changed. For example, the UE 1104 may receive a PUCCH configuration from a base station 1102. In some aspects, 1702 may be performed by the SPS component 2044 in FIG. 20.

At 1712, the UE may transmit, using the configured PUCCH for each of the successive SPS periods, a response to a data message from the base station. In some aspects, 1712 may be performed by the ACK/NACK component 2042 in FIG. 20. For example, the UE 1104 may transmit a response to the base station 1102.

At 1706, the UE may receive on the PDCCH channel, data indicating a number of successive SPS periods for which the configured PUCCH is valid. In some aspects, 1706 may be performed by the reception component 2030 in FIG. 20. For example, the UE 1104 may transmit a response to the base station 1102.

At 1708, the UE may receive from the base station during the SPS reactivation period, DCI specifying downlink information for the PDSCH. In some aspects, 1708 may be performed by the SPS component 2044. For example, the UE 1104 may receive from the base station 1102 during the SPS reactivation period, DCI specifying downlink information for the PDSCH.

At 1710, the UE may receive a new PUCCH configuration included in either an RRC signaling interval or another SPS reactivation period. In some aspects, 1710 may be performed by the SPS component 2044. For example, the UE 1104 may receive a new PUCCH configuration included in either an RRC signaling interval or another SPS reactivation period from the base station 1102. 1710 may be performed by the reception component 2030 in FIG. 20.

At 1714, the UE may transmit a response to a message from the base station to indicate an ACK or a NACK using the allocated PUCCH. For example, the UE 1104 may transmit a response to the base station 1102. In some aspects, 1714 may be performed by the ACK/NACK component 2042 in FIG. 20.

At 1716, the UE may also transmit, after the number of successive SPS periods is completed, responses to subsequent SPS-based messages to the base station using a default PUCCH obtained from a prior RRC session. For example, the UE 1104 may transmit, after the number of successive SPS periods is completed, responses to subsequent SPS-based messages to the base station 1102 using a default PUCCH obtained from a prior RRC session. In some aspects, 1716 may be performed by the ACK/NACK component 2042 in FIG. 20.

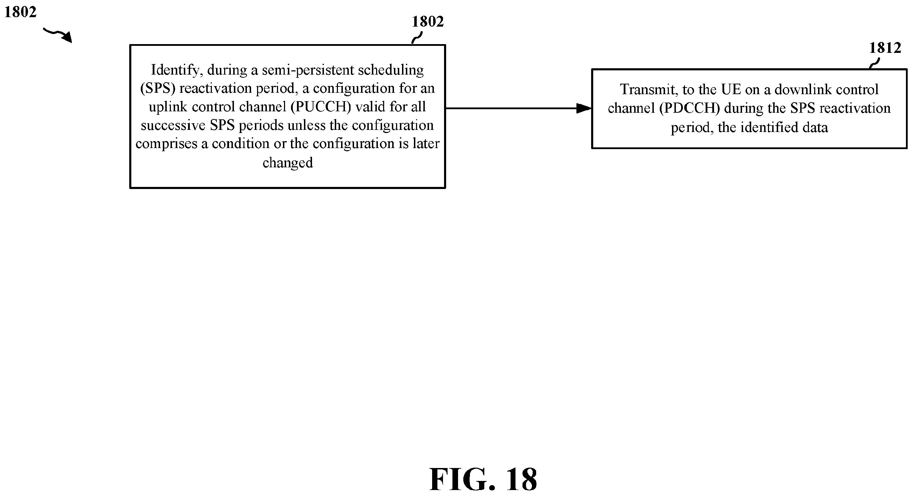

FIG. 18 shows a flowchart of wireless communications performed by a base station (e.g., the base station 102/180; the base station 1102, or the like).

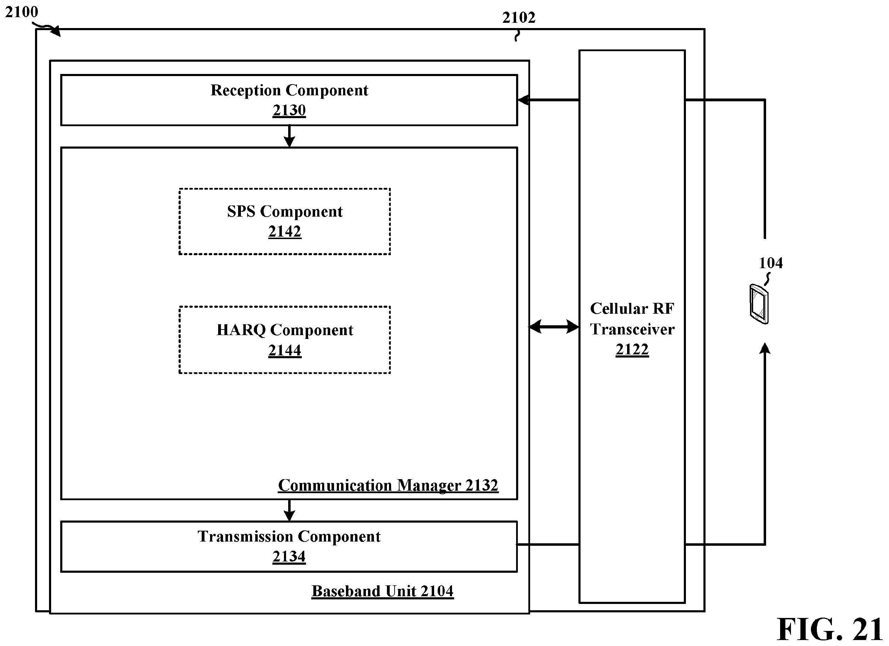

At 1802, the base station identifies, during a SPS reactivation period, a configuration for an PUCCH valid for all successive SPS periods unless the configuration comprises a condition or the configuration is later changed. For example, the base station 1102 may identify during a SPS reactivation period, a configuration for an PUCCH valid for all successive SPS periods unless the configuration comprises a condition or the configuration is later changed. In some aspects, 1802 may be performed by the SPS component 2142 of FIG. 21.

At 1812, the base station may transmit to the UE on a PDCCH during the SPS reactivation period, the identified data. For example, the base station 1102 may transmit to the UE 1104 on a PDCCH during the SPS reactivation period, the identified data. In some aspects, 1812 may be performed by the SPS component 2142 of FIG. 21.

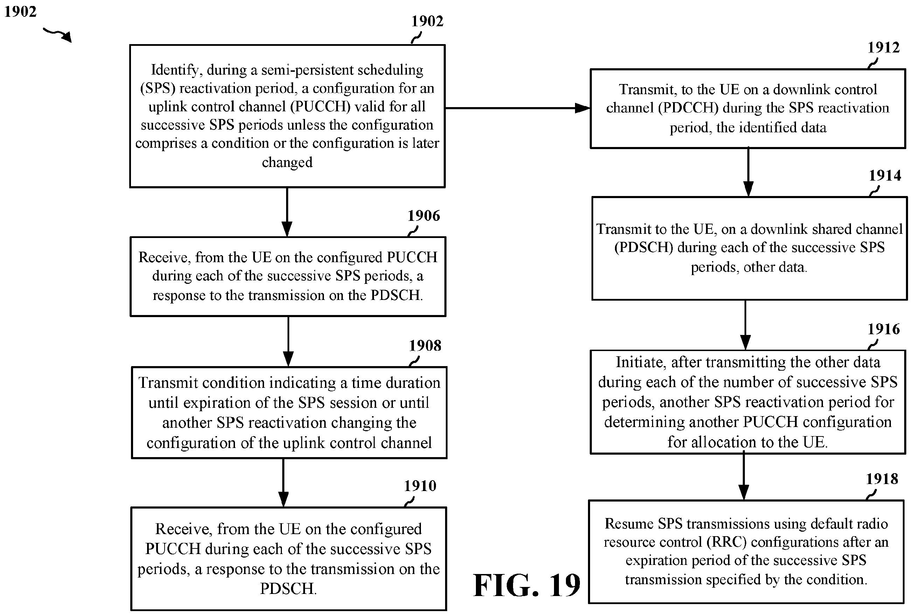

FIG. 19 shows a flowchart of wireless communications performed by a base station (e.g., the base station 102/190; the base station 1102, or the like).

At 1902, the base station identifies, during a SPS reactivation period, a configuration for an PUCCH valid for all successive SPS periods unless the configuration comprises a condition or the configuration is later changed. For example, the base station 1102 may identify during a SPS reactivation period, a configuration for an PUCCH valid for all successive SPS periods unless the configuration comprises a condition or the configuration is later changed. In some aspects, 1902 may be performed by the SPS component 2142 of FIG. 21.

At 1912, the base station may transmit to the UE on a PDCCH during the SPS reactivation period, the identified data. For example, the base station 1102 may transmit to the UE 1104 on a PDCCH during the SPS reactivation period, the identified data. In some aspects, 1912 may be performed by the SPS component 2142 of FIG. 21.

At 1906, the base station may receive from the UE responses to the data transmissions during each of the successive SPS periods. For example, the base station 1102 may receive from the UE 1104, responses to the data transmissions during each of the successive SPS periods. In some aspects, 1906 may be performed by the SPS component 2142 of FIG. 21.

At 1908, the base station may transmit with the SPS PDCCH a condition that indicate s a time duration for expiration of the SPS session, unless another SPS reactivation changes the configuration of the uplink control channel. For example, the base station 1102 may transmit with the SPS PDCCH a condition that indicates a time duration for expiration of the SPS session. In some aspects, 1908 may be performed by the SPS component 2142 of FIG. 21. The UE may use the new PUCCH configuration until the specified expiration, unless the UE receives another SPS reactivation changing the configuration.

At 1910, the base station receives a response, such as an ACK or NACK, on the configured PUCCH during each of the successive SPS periods. For example, the base station 1102 may receive a response, such as an ACK or NACK, on the configured PUCCH during each of the successive SPS periods. In some aspects, 1910 may be performed by the HARQ component 2144 of FIG. 21.

At 1914, the base station may transmit to the UE on a downlink shared channel, data pertaining to the SPS configuration (e.g., voice data, sensor data, etc.). For example, the base station 1102 may transmit to the UE on a downlink shared channel, data pertaining to the SPS configuration. In some aspects, 1914 may be performed by the SPS component 2142 of FIG. 21.

At 1916, the base station may initiate, when a specified number of the successive SPS periods are complete, another SPS reactivation period for continued use of the SPS session at a suitable uplink (and downlink) channel configuration. For example, the base station 1102 may initiate, when a specified number of the successive SPS periods are complete, another SPS reactivation period for continued use of the SPS session at a suitable uplink (and downlink) channel configuration. In some aspects, 1916 may be performed by the SPS component 2142 of FIG. 21.

At 1918, the base station may resume SPS transmissions using RRC configurations following an expiration period specified by the condition. For example, the base station 1102 may resume SPS transmissions using RRC configurations following an expiration period specified by the condition. In some aspects, 1918 may be performed by the SPS component 2142 of FIG. 21.

FIG. 20 is a diagram 2000 illustrating an example of a hardware implementation for an apparatus 2002. The apparatus 2002 may be a UE, a component of a UE, or may implement UE functionality. In some aspects, the apparatus 2002 may include a cellular baseband processor 2004 (also referred to as a modem) coupled to a cellular RF transceiver 2022. In some aspects, the apparatus 2002 may further include one or more subscriber identity modules (SIM) cards 2020, an application processor 2006 coupled to a secure digital (SD) card 2008 and a screen 2010, a Bluetooth module 2012, a wireless local area network (WLAN) module 2014, a Global Positioning System (GPS) module 2016, or a power supply 2018. The cellular baseband processor 2004 communicates through the cellular RF transceiver 2022 with the UE 104 and/or BS 102/180. The cellular baseband processor 2004 may include a computer-readable medium / memory. The computer-readable medium / memory may be non-transitory. The cellular baseband processor 2004 is responsible for general processing, including the execution of software stored on the computer-readable medium / memory. The software, when executed by the cellular baseband processor 2004, causes the cellular baseband processor 2004 to perform the various functions described *supra.* The computer-readable medium / memory may also be used for storing data that is manipulated by the cellular baseband processor 2004 when executing software. The cellular baseband processor 2004 further includes a reception component 2030, a communication manager 2032, and a transmission component 2034. The communication manager 2032 includes the one or more illustrated components. The components within the communication manager 2032 may be stored in the computer-readable medium / memory and/or configured as hardware within the cellular baseband processor 2004. The cellular baseband processor 2004 may be a component of the UE 350 and may include the memory 360 and/or at least one of the TX processor 368, the RX processor 356, and the controller/processor 359. In one configuration, the apparatus 2002 may be a modem chip and include just the baseband processor 2004, and in another configuration, the apparatus 2002 may be the entire UE (e.g., see 350 of FIG. 3) and include the additional modules of the apparatus 2002.

The communication manager 2032 may include a SPS component 2044 that may be configured to perform one or more of 1202, 1204, 1302, 1304, 1602, 1702, 1706, 1708, or 1710. The communication manager 2032 may further include an ACK/NACK component 2042 that may be configured to perform one or more of 1206, 1306, 1612, 1712, 1714, or 1716.

The apparatus may include additional components that perform each of the blocks of the algorithm in the flowcharts of FIGs. 12-13 and 16-17. As such, each block in the flowcharts of FIGs. 12-13 and 16-17 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 2002 may include a variety of components configured for various functions. In one configuration, the apparatus 2002, and in particular the cellular baseband processor 2004, may include means for receiving, from a base station during a SPS reactivation period, a PUCCH configuration that remains valid for all successive SPS periods unless conditioned by data accompanying the PUCCH configuration or later changed. The cellular baseband processor 2004 may further include means for transmitting, using the configured PUCCH for each of the successive SPS periods, a response to a data message from the base station. The cellular baseband processor 2004 may further include means for receiving on a PDCCH data indicating a number of successive SPS periods for which the configured PUCCH is valid. The cellular baseband processor 2004 may further include means for transmitting, after the number of successive SPS periods is completed, responses to subsequent SPS-based messages from the base station using a default PUCCH obtained from a prior RRC session. The cellular baseband processor 2004 may further include means for receiving, from the base station during the SPS reactivation period, DCI specifying a configuration for a physical downlink PDSCH. The cellular baseband processor 2004 may further include means for transmitting a response to a message from the base station further comprises sending one of an ACK or a NACK responsive to whether the message was successfully decoded. The cellular baseband processor 2004 may further include means for transmitting, during each of the SPS periods, an SRS after transmitting the response to the base station. The cellular baseband processor 2004 may further include means for receiving, from a base station, a first SPS reactivation DCI. The cellular baseband processor 2004 may further include means for receiving, from the base station, a second SPS reactivation DCI. The cellular baseband processor 2004 may further include means for transmitting, to the base station, a HARQ feedback separately indicating detection of the received first SPS reactivation DCI and the received second SPS reactivation DCI. The cellular baseband processor 2004 may further include means for receiving first SPS release. The cellular baseband processor 2004 may further include means for receiving second SPS release. The means may be one or more of the components of the apparatus 2002 configured to perform the functions recited by the means. As described *supra,* the apparatus 2002 may include the TX Processor 368, the RX Processor 356, and the controller/processor 359. As such, in one configuration, the means may be the TX Processor 368, the RX Processor 356, and the controller/processor 359 configured to perform the functions recited by the means.

FIG. 21 is a diagram 2100 illustrating an example of a hardware implementation for an apparatus 2102. The apparatus 2102 may be a base station, a component of a base station, or may implement base station functionality. In some aspects, the apparatus 2002 may include a baseband unit 2104. The baseband unit 2104 may communicate through a cellular RF transceiver 2122 with the UE 104. The baseband unit 2104 may include a computer-readable medium / memory. The baseband unit 2104 is responsible for general processing, including the execution of software stored on the computer-readable medium / memory. The software, when executed by the baseband unit 2104, causes the baseband unit 2104 to perform the various functions described *supra.* The computer-readable medium / memory may also be used for storing data that is manipulated by the baseband unit 2104 when executing software. The baseband unit 2104 further includes a reception component 2130, a communication manager 2132, and a transmission component 2134. The communication manager 2132 includes the one or more illustrated components. The components within the communication manager 2132 may be stored in the computer-readable medium / memory and/or configured as hardware within the baseband unit 2104. The baseband unit 2104 may be a component of the base station 310 and may include the memory 376 and/or at least one of the TX processor 316, the RX processor 370, and the controller/processor 375.

The communication manager 2132 may include a SPS component 2142 that may perform one or more of 1402, 1404, 1502, 1504, 1802, 1812, 1902, 1912, 1908, 1914, 1916, or 1918. The communication manager 2132 further may include a HARQ component 2144 that may perform one or more of 1406, 1506, 1906, or 1910.

The apparatus may include additional components that perform each of the blocks of the algorithm in the flowcharts of FIGs. 14-15 and 18-19. As such, each block in the flowcharts of FIGs. 14-15 and 18-19 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 2102 may include a variety of components configured for various functions. In one configuration, the apparatus 2102, and in particular the baseband unit 2104, may include means for identifying, during a SPS reactivation period, a configuration for a PUCCH valid for all successive SPS periods unless the configuration comprises a condition or the configuration is later changed. The baseband unit 2104 may further include means for transmitting, to the UE on a PDCCH during the SPS reactivation period, the identified PUCCH configuration. The baseband unit 2104 may further include means for transmitting to the UE, on a PDSCH during each of the successive SPS periods, other data. The baseband unit 2104 may further include means for initiating, after transmitting the other data during each of the number of successive SPS periods, another SPS reactivation period for determining another PUCCH configuration for allocation to the UE. The baseband unit 2104 may further include means for receiving, from the UE on the configured PUCCH during each of the successive SPS periods, a response to the transmission on the PDSCH. The baseband unit 2104 may further include means for resuming SPS transmissions using default RRC configurations after an expiration period of the successive SPS transmission specified by the condition. The baseband unit 2104 may further include means for identifying DCI, the DCI comprising a configuration of the downlink shared channel. The baseband unit 2104 may further include means for transmitting, to a UE, a first SPS reactivation DCI. The baseband unit 2104 may further include means for transmitting, to the UE, a second SPS reactivation DCI. The baseband unit 2104 may further include means for receiving, from the UE, a HARQ feedback separately indicating detection of the received first SPS reactivation DCI and the received second SPS reactivation DCI. The baseband unit 2104 may further include means for transmitting a first SPS release. The baseband unit 2104 may further include means for transmitting a second SPS release. The means may be one or more of the components of the apparatus 2102 configured to perform the functions recited by the means. As described supra, the apparatus 2102 may include the TX Processor 316, the RX Processor 370, and the controller/processor 375. As such, in one configuration, the means may be the TX Processor 316, the RX Processor 370, and the controller/processor 375 configured to perform the functions recited by the means.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. An apparatus for wireless communication at a user equipment, UE, the apparatus comprising:
a memory; and
at least one processor coupled to the memory and configured to:
receive (1202), from a base station, a first semi-persistent scheduling, SPS, reactivation downlink control information, DCI;
receive (1204), from the base station, a second SPS reactivation DCI; and
transmit (1206), to the base station, a hybrid automatic repeat request, HARQ, feedback separately indicating detection of the first SPS reactivation DCI and the second SPS reactivation DCI, wherein
the HARQ feedback comprises a first indication indicating reception of the first SPS reactivation DCI and a second indication indicating reception of the second SPS reactivation DCI.

2. The apparatus of claim 1, wherein the first SPS reactivation DCI or the second SPS reactivation DCI modifies one or more physical uplink control channel, PUCCH, parameters comprising a PUCCH resource indicator, PRI.

3. The apparatus of claim 1, wherein the HARQ feedback further comprises a third indication indicating whether a first SPS physical data shared channel, PDSCH, associated with the first SPS reactivation DCI was received and a second set of symbols indicating whether a second SPS PDSCH associated with the second SPS reactivation DCI was received, wherein a downlink assignment index, DAI, for one or more SPS physical data shared channels, PDSCHs, is also for the first SPS reactivation DCI and the second SPS reactivation DCI, and wherein the DAI is included in the first SPS reactivation DCI or the second SPS reactivation DCI.

4. The apparatus of claim 3, wherein the DAI comprises a number of bits corresponding to a number of SPS configuration.

5. The apparatus of claim 1, wherein the first SPS reactivation DCI or the second SPS reactivation DCI includes a field of type SPS configuration index.

6. The apparatus of claim 1, wherein a first set of physical uplink control channel, PUCCH, resources is associated with a first SPS and a second set of PUCCH resources is associated with a second SPS.

7. The apparatus of claim 1, wherein the at least one processor is further configured to:
receive a first SPS release for a first SPS prior to receiving the first SPS reactivation DCI; and
receive a second SPS release for a second SPS prior to receiving the first SPS reactivation DCI.

8. An apparatus of wireless communication at a base station, the apparatus comprising:
a memory; and
at least one processor coupled to the memory and configured to:
transmit (1402), to a UE, a first semi-persistent scheduling, SPS, reactivation downlink control information, DCI;
transmit (1404), to the UE, a second SPS reactivation DCI; and
receive (1406), from the UE, a hybrid automatic repeat request, HARQ, feedback separately indicating detection of the first SPS reactivation DCI and the second SPS reactivation DCI, wherein
the HARQ feedback comprises a first indication indicating reception of the first SPS reactivation DCI and a second indication indicating reception of the second SPS reactivation DCI.

9. The apparatus of claim 8, wherein the first SPS reactivation DCI and the second SPS reactivation DCI are for a physical data shared channel, PDSCH.

10. The apparatus of claim 8, wherein the first SPS reactivation DCI or the second SPS reactivation DCI modifies one or more physical uplink control channel, PUCCH, parameters comprising a PUCCH resource indicator, PRI.

11. The apparatus of claim 8, wherein the HARQ feedback further comprises a third indication indicating whether a first SPS physical data shared channel, PDSCH, associated with the first SPS reactivation DCI was received and a second set of symbols indicating whether a second SPS PDSCH associated with the second SPS reactivation DCI was received.

12. The apparatus of claim 8, wherein a downlink assignment index, DAI, for one or more SPS physical data shared channels, PDSCHs, is also for the first SPS reactivation DCI and the second SPS reactivation DCI.

13. The apparatus of claim 12, wherein the DAI is included in the first SPS reactivation DCI or the second SPS reactivation DCI.

14. A method for wireless communication performed by a user equipment, UE, the method comprising:
receiving (1202), from a base station, a first semi-persistent scheduling, SPS, reactivation downlink control information, DCI;
receiving (1204), from the base station, a second SPS reactivation DCI; and
transmitting (1206), to the base station, a hybrid automatic repeat request, HARQ, feedback separately indicating detection of the first SPS reactivation DCI and the second SPS reactivation DCI, wherein
the HARQ feedback comprises a first indication indicating reception of the first SPS reactivation DCI and a second indication indicating reception of the second SPS reactivation DCI.

15. A method of wireless communication performed by a base station, the method comprising:
transmitting (1402), to a UE, a first semi-persistent scheduling, SPS, reactivation downlink control information, DCI;
transmitting (1404), to the UE, a second SPS reactivation DCI; and
receiving (1406), from the UE, a hybrid automatic repeat request, HARQ, feedback separately indicating detection of the first SPS reactivation DCI and the second SPS reactivation DCI, wherein
the HARQ feedback comprises a first indication indicating reception of the first SPS reactivation DCI and a second indication indicating reception of the second SPS reactivation DCI.

## Patentansprüche

1. Eine Vorrichtung für eine drahtlose Kommunikation an einem Benutzergerät (User Equipment bzw. UE), wobei die Vorrichtung aufweist:
einen Speicher, und
wenigstens einen Prozessor, der mit dem Speicher gekoppelt ist und konfiguriert ist zum:
Empfangen (1202), von einer Basisstation, von ersten Semipersistente-Planung (Semi-Persistent Scheduling bzw. SPS)-Reaktivierung-Downlink-Steuerinformationen (Downlink Control Information bzw. DCI),
Empfangen (1204), von der Basisstation, von zweiten SPS-Reaktivierung-DCI, und
Senden (1206), an die Basisstation, einer HARQ (Hybrid Automatic Repeat Request)-Rückmeldung, die separat eine Erfassung der ersten SPS-Reaktivierung-DCI und der zweiten SPS-Reaktivierung-DCI angibt,
wobei die HARQ-Rückmeldung eine erste Angabe, die einen Empfang der ersten SPS-Reaktivierung-DCI angibt, und eine zweite Angabe, die einen Empfang der zweiten SPS-Reaktivierung-DCI angibt, aufweist.

2. Vorrichtung nach Anspruch 1, wobei die ersten SPS-Reaktivierung-DCI oder die zweiten SPS-Reaktivierung-DCI einen oder mehrere Physikalischer-Uplink-Steuerkanal (PUCCH)-Parameter einschließlich eines PUCCH-Ressourcenindikators (PRI) modifizieren.

3. Vorrichtung nach Anspruch 1, wobei die HARQ-Rückmeldung weiterhin eine dritte Angabe, die angibt, ob ein mit den ersten SPS-Reaktivierung-DCI assoziierter erster SPS-Gemeinsamer-Physikalische-Daten-Kanal (PDSCH) empfangen wurde, und einen zweiten Satz von Symbolen, die angeben, ob ein mit den zweiten SPS-Reaktivierung-DCI assoziierter zweiter SPS-PDSCH empfangen wurde, aufweist, wobei ein Downlink-Zuweisungsindex (Downlink Assignment Index bzw. DAI) für einen oder mehrere SPS-Gemeinsamer-Physikalische-Daten-Kanäle (PDSCHs) auch für die ersten SPS-Reaktivierung-DCI und die zweiten SPS-Reaktivierung-DCI vorgesehen ist und wobei der DAI in den ersten SPS-Reaktivierung-DCI oder den zweiten SPS-Reaktivierung-DCI enthalten ist.

4. Vorrichtung nach Anspruch 3, wobei der DAI eine Anzahl von Bits in Entsprechung zu einer Anzahl der SPS-Konfiguration aufweist.

5. Vorrichtung nach Anspruch 1, wobei die ersten SPS-Reaktivierung-DCI oder die zweiten SPS-Reaktivierung-DCI einen Feldtyp-SPS-Konfigurationsindex enthalten.

6. Vorrichtung nach Anspruch 1, wobei ein erster Satz von Physikalischer-Uplink-Steuerkanal (PUCCH)-Ressourcen mit einer ersten SPS assoziiert ist und ein zweiter Satz von PUCCH-Ressourcen mit einer zweiten SPS assoziiert ist.

7. Vorrichtung nach Anspruch 1, wobei der wenigstens eine Prozessor weiterhin konfiguriert ist zum:
Empfangen einer ersten SPS-Freigabe für eine erste SPS vor dem Empfangen der ersten SPS-Reaktivierung-DCI, und
Empfangen einer zweiten SPS-Freigabe für eine zweite SPS vor dem Empfangen der ersten SPS-Reaktivierung-DCI.

8. Eine Vorrichtung für eine drahtlose Kommunikation an einer Basisstation, wobei die Vorrichtung aufweist:
einen Speicher, und
wenigstens einen Prozessor, der mit dem Speicher gekoppelt ist und konfiguriert ist zum:
Senden (1402), an ein UE, von ersten Semipersistente-Planung (Semi-Persistent Scheduling bzw. SPS)-Reaktivierung-Downlink-Steuerinformationen (Downlink Control Information bzw. DCI),
Senden (1404), an das UE, von zweiten SPS-Reaktivierung-DCI, und
Empfangen (1406), von dem UE, einer HARQ (Hybrid Automatic Repeat Request)-Rückmeldung, die separat eine Erfassung der ersten SPS-Reaktivierung-DCI und der zweiten SPS-Reaktivierung-DCI angibt,
wobei die HARQ-Rückmeldung eine erste Angabe, die einen Empfang der ersten SPS-Reaktivierung-DCI angibt, und eine zweite Angabe, die einen Empfang der zweiten SPS-Reaktivierung-DCI angibt, aufweist.

9. Vorrichtung nach Anspruch 8, wobei die ersten SPS-Reaktivierung-DCI und die zweiten SPS-Reaktivierung-DCI für einen gemeinsamen Physikalische-Daten-Kanal (PDSCH) vorgesehen sind.

10. Vorrichtung nach Anspruch 8, wobei die ersten SPS-Reaktivierung-DCI oder die zweiten SPS-Reaktivierung-DCI einen oder mehrere Physikalischer-Uplink-Steuerkanal (PUCCH)-Parameter einschließlich eines PUCCH-Ressourcenindikators (PRI) modifizieren.

11. Vorrichtung nach Anspruch 8, wobei die HARQ-Rückmeldung weiterhin eine dritte Angabe, die angibt, ob ein mit den ersten SPS-Reaktivierung-DCI assoziierter erster SPS-Gemeinsamer-Physikalische-Daten-Kanal (PDSCH) empfangen wurde, und einen zweiten Satz von Symbolen, die angeben, ob ein mit den zweiten SPS-Reaktivierung-DCI assoziierter zweiter SPS-PDSCH empfangen wurde, aufweist.

12. Vorrichtung nach Anspruch 8, wobei ein Downlink-Zuweisungsindex (Downlink Assignment Index bzw. DAI) für einen oder mehrere SPS-Gemeinsame-Physikalische-Daten-Kanäle (PDSCHs) auch für die ersten SPS-Reaktivierung-DCI und die zweiten SPS-Reaktivierung-DCI vorgesehen ist.

13. Vorrichtung nach Anspruch 12, wobei der DAI in den ersten SPS-Reaktivierung-DCI oder den zweiten SPS-Reaktivierung-DCI enthalten ist.

14. Ein Verfahren für eine drahtlose Kommunikation, das durch ein Benutzergerät (User Equipment bzw. UE) durchgeführt wird, wobei das Verfahren aufweist:
Empfangen (1202), von einer Basisstation, von ersten Semipersistente-Planung (Semi-Persistent Scheduling bzw. SPS)-Reaktivierung-Downlink-Steuerinformationen (Downlink Control Information bzw. DCI),
Empfangen (1204), von der Basisstation, von zweiten SPS-Reaktivierung-DCI, und
Senden (1206), an die Basisstation, einer HARQ (Hybrid Automatic Repeat Request)-Rückmeldung, die separat eine Erfassung der ersten SPS-Reaktivierung-DCI und der zweiten SPS-Reaktivierung-DCI angibt,
wobei die HARQ-Rückmeldung eine erste Angabe, die einen Empfang der ersten SPS-Reaktivierung-DCI angibt, und eine zweite Angabe, die einen Empfang der zweiten SPS-Reaktivierung-DCI angibt, aufweist.

15. Ein Verfahren für eine drahtlose Kommunikation, das durch eine Basisstation durchgeführt wird, wobei das Verfahren aufweist:
Senden (1402), an ein UE, von ersten Semipersistente-Planung (Semi-Persistent Scheduling bzw. SPS)-Reaktivierung-Downlink-Steuerinformationen (Downlink Control Information bzw. DCI),
Senden (1404), an das UE, von zweiten SPS-Reaktivierung-DCI, und
Empfangen (1406), von dem UE, einer HARQ (Hybrid Automatic Repeat Request)-Rückmeldung, die separat eine Erfassung der ersten SPS-Reaktivierung-DCI und der zweiten SPS-Reaktivierung-DCI angibt,
wobei die HARQ-Rückmeldung eine erste Angabe, die einen Empfang der ersten SPS-Reaktivierung-DCI angibt, und eine zweite Angabe, die einen Empfang der zweiten SPS-Reaktivierung-DCI angibt, aufweist.

## Revendications

1. Un appareil de communication sans fil au niveau d'un équipement d'utilisateur, UE, l'appareil comprenant :
une mémoire ; et
au moins un processeur couplé à la mémoire et configuré pour :
recevoir (1202), depuis une station de base, des premières informations de commande de liaison descendante, DCI, de réactivation d'ordonnancement semi-permanent, SPS ;
recevoir (1204), depuis la station de base, des deuxièmes DCI de réactivation SPS ; et
transmettre (1206), à la station de base, un retour d'informations de demande de répétition automatique hybride, HARQ, indiquant séparément la détection des premières DCI de réactivation SPS et des deuxièmes DCI de réactivation SPS, dans lequel
le retour d'informations HARQ comprend une première indication indiquant la réception des premières DCI de réactivation SPS et une deuxième indication indiquant la réception des deuxièmes DCI de réactivation SPS.

2. L'appareil selon la revendication 1, dans lequel les premières DCI de réactivation SPS ou les deuxièmes DCI de réactivation SPS modifient un ou plusieurs paramètres de canal physique de commande de liaison montante, PUCCH, comprenant un indicateur de ressource PUCCH, PRI.

3. L'appareil selon la revendication 1, dans lequel le retour d'informations HARQ comprend en outre une troisième indication indiquant si un premier canal partagé de données physiques, PDSCH, du SPS associé aux premières DCI de réactivation SPS a été reçu et un deuxième ensemble de symboles indiquant si un deuxième PDSCH du SPS associé aux deuxièmes DCI de réactivation SPS a été reçu, dans lequel un indice d'attribution de liaison descendante, DAI, pour un ou plusieurs canaux partagés de données physiques, PDSCH, du SPS est également destiné aux premières DCI de réactivation SPS et aux deuxièmes DCI de réactivation SPS, et dans lequel le DAI est inclus dans les premières DCI de réactivation SPS ou les deuxièmes DCI de réactivation SPS.

4. L'appareil selon la revendication 3, dans lequel le DAI comprend un nombre de bits correspondant à un nombre de configurations SPS.

5. L'appareil selon la revendication 1, dans lequel les premières DCI de réactivation SPS ou les deuxièmes DCI de réactivation SPS comprennent un champ d'indice de configuration de type SPS.

6. L'appareil de la revendication 1, dans lequel un premier ensemble de ressources de canal de commande physique de liaison montante, PUCCH, est associé à un premier SPS et un deuxième ensemble de ressources PUCCH est associé à un deuxième SPS.

7. L'appareil selon la revendication 1, dans lequel l'au moins un processeur est en outre configuré pour :
recevoir une première libération SPS pour un premier SPS avant de recevoir les premières DCI de réactivation SPS ; et
recevoir une deuxième libération de SPS pour un deuxième SPS avant de recevoir les premières DCI de réactivation de SPS.

8. Un appareil de communication sans fil au niveau d'une station de base, l'appareil comprenant :
une mémoire ; et
au moins un processeur couplé à la mémoire et configuré pour :
transmettre (1402), à un UE, des premières informations de commande de liaison descendante, DCI, de réactivation d'ordonnancement semi-permanent, SPS ;
transmettre (1404), à l'UE, des deuxièmes DCI de réactivation SPS ; et
recevoir (1406), depuis l'UE, une demande de répétition automatique hybride, HARQ, un retour d'informations indiquant séparément la détection des premières DCI de réactivation SPS et des deuxièmes DCI de réactivation SPS, dans lequel :
le retour d'informations HARQ comprend une première indication indiquant la réception des premières DCI de réactivation SPS et une deuxième indication indiquant la réception des deuxièmes DCI de réactivation SPS.

9. L'appareil selon la revendication 8, dans lequel les premières DCI de réactivation SPS et les deuxièmes DCI de réactivation SPS sont destinées à un canal partagé de données physiques, PDSCH.

10. L'appareil selon la revendication 8, dans lequel les premières DCI de réactivation SPS ou les deuxièmes DCI de réactivation SPS modifient un ou plusieurs paramètres de canal de commande de liaison montante physique, PUCCH, comprenant un indicateur de ressource PUCCH, PRI.

11. L'appareil selon la revendication 8, dans lequel le retour d'informations HARQ comprend en outre une troisième indication indiquant si un premier canal partagé de données physiques, PDSCH, du SPS associé aux premières DCI de réactivation SPS a été reçu et un deuxième ensemble de symboles indiquant si un deuxième PDSCH du SPS associé aux deuxièmes DCI de réactivation SPS a été reçu.

12. L'appareil selon la revendication 8, dans lequel un indice d'attribution de liaison descendante, DAI, pour un ou plusieurs canaux partagés de données physiques, PDSCH, du SPS est également destiné aux premières DCI de réactivation SPS et aux deuxièmes DCI de réactivation SPS.

13. L'appareil selon la revendication 12, dans lequel le DAI est inclus dans les premières DCI de réactivation SPS ou les deuxièmes DCI de réactivation SPS.

14. Procédé de communication sans fil effectué par un équipement d'utilisateur, UE, le procédé comprenant les étapes consistant à :
recevoir (1202), depuis une station de base, des premières informations de commande de liaison descendante, DCI, de réactivation d'ordonnancement semi-permanent, SPS ;
recevoir (1204), depuis la station de base, des deuxièmes DCI de réactivation SPS ; et
transmettre (1206), à la station de base, un retour d'informations de demande de répétition automatique hybride, HARQ, indiquant séparément la détection des premières DCI de réactivation SPS et des deuxièmes DCI de réactivation SPS, dans lequel le retour d'informations HARQ comprend une première indication indiquant la réception des premières DCI de réactivation SPS et une deuxième indication indiquant la réception des deuxièmes DCI de réactivation SPS.

15. Procédé de communication sans fil effectué par une station de base, le procédé comprenant les étapes consistant à :
transmettre (1402), à un UE, des premières informations de commande de liaison descendante, DCI, de réactivation d'ordonnancement semi-permanent, SPS;
transmettre (1404), à l'UE, des deuxièmes DCI de réactivation SPS ; et
recevoir (1406), depuis l'UE, un retour d'informations de demande de répétition automatique hybride, HARQ, indiquant séparément la détection des premières DCI de réactivation SPS et des deuxièmes DCI de réactivation SPS, dans lequel :
le retour d'informations HARQ comprend une première indication indiquant la réception des premières DCI de réactivation SPS et une deuxième indication indiquant la réception des deuxièmes DCI de réactivation SPS.
